# EUROPEAN PATENT SPECIFICATION

(11) **EP 3 965 363 B1**
(45) Date of publication and mention of the grant of the patent: **17.12.2025**
(21) Application number: 21194599.3
(22) Date of filing: 02.09.2021
(51) Int. Cl.: H04L 9/40, H04W 12/122, H04L 61/103, H04L 61/5014

(54) **METHODS AND SYSTEMS FOR ENABLING IDENTITY-BASED SERVICES USING A RANDOM IDENTIFIER**
VERFAHREN UND SYSTEME ZUR ERMÖGLICHUNG VON IDENTITÄTSBASIERTEN DIENSTEN UNTER VERWENDUNG EINER ZUFALLSKENNUNG
PROCÉDÉS ET SYSTÈMES POUR PERMETTRE DES SERVICES BASÉS SUR L'IDENTITÉ À L'AIDE D'UN IDENTIFIANT ALÉATOIRE

(30) Priority: 02.09.2020 US 202063073845 P
(43) Date of publication of application: 09.03.2022
(73) Proprietor: Comcast Cable Communications LLC, Philadelphia, Pennsylvania 19103 (US)
(72) Inventor: MUTHUSAMY, Saravanan, Philadelphia, 19103 (US); SIDDALINGA, Prasad, Philadelphia, 19103 (US); POOVAPPA, Vinayaka, Philadelphia, 19103 (US)
(74) Representative: V.O.

(56) References cited:
- WO-A1-2020/076630
- US-A1- 2020 154 272
- US-A1- 2020 275 277

## Description

### CROSS-REFERENCE TO RELATED APPLICATION

This application claims priority to U.S. Provisional Application No.:63/073,845, filed September 2, 2020.

### BACKGROUND

As background, US 2020/0275277 A1 describes wireless-network attack detection. An identifier (e.g., a Media Access Control (MAC) address, an International Mobile Subscriber Identity (IMSI), an International Mobile Station Equipment Identity (IMEI), etc.) is used identify a user device (e.g., a mobile device, a smart device, a computer/computing device, a client device, etc.) to a network (e.g., a private network, a public network, Internet, etc.) and/or network device (e.g., an access point, a gateway, a Wi-Fi server, a captive portal device, etc.). The identifier may be persisted and/or stored by the network/network device to enable one or more identity-based services, such as a login-less network connection and/or reconnection, one or more subscription services, parental controls, content/advertisement tracking, private network access (e.g., identifier-based routing to private SSIDs, etc.), and/or the like. Third parties, such as network hackers, eavesdroppers, and/or other bad actors, use network sniffing, log tracking, and/or the like to track the identifiers of user devices when connecting to various networks/network devices. To prevent third parties from using an identifier to track user devices when connecting to networks and ensure privacy, many user devices implement identifier randomization. A user device configured with a random identifier is unable to receive identity-based services because the random identifier is an instance-based identifier that is not persisted by a network/network device. For example, a user device using a random identifier to access a public Wi-Fi network at an airport may be directed to a captive portal to submit credentials (e.g., login information, a password, etc.) each time the user device attempts to access the public Wi-Fi network because the network is unable to persist (e.g., store authorization of, etc.) the random identifier. This degrades user experience.

### SUMMARY

The scope of this patent is defined by the independent claims. Further embodiments are defined in the dependent claims. It is to be understood that both the following general description and the following detailed description are exemplary and explanatory only and are not restrictive. Methods and systems for enabling identity-based services using a random identifier are described.

A user device (e.g., a mobile device, a smart device, a computer/computing device, a client device, etc.) may send a request to a network device (e.g., access point, gateway, server, captive portal device, etc.) to connect to (e.g., establish a communication session with, etc.) a network (e.g., private network, public network, Internet, etc.) using a random identifier (e.g., a Media Access Control (MAC) address, an International Mobile Subscriber Identity (IMSI), an International Mobile Station Equipment Identity (IMEI), etc.). For example, the user device may perform a handshake communication process (e.g., discovery, offer, request, acknowledgment, three-way handshake, etc.) with the network device using a random identifier, and the network device may provide the user device a network address based on an acknowledgment of the random identifier. The user device may use the network address to send encrypted information to the network device. For example, the encrypted information may be sent via one or more of: Hypertext Transfer Protocol Secure (HTTPS), Extensible Authentication Protocol-Transport Layer Security (EAP-TLS), Secure Sockets Layer (SSL), versions on Wi-Fi Protected Access (WPA, WPA2, WPA3, etc.), Wired Equivalent Privacy (WEP), and/or the like. The encrypted information may include a persistent identifier (e.g.. a Media Access Control (MAC) address, an International Mobile Subscriber Identity (IMSI), an International Mobile Station Equipment Identity (IMEI), etc.) of the user device.

The network device may decrypt the encrypted information and associate the random identifier with a persistent identifier. The persistent identifier and/or user device may be associated with one or more identity-based services, such as a login-less network connection and/or reconnection, one or more subscription services, parental controls, content/advertisement tracking, private network access (e.g., identifier-based routing to private SSIDs, etc.), and/or the like. The association between the random identifier and the persistent identifier enables the user device to access the identity-based services. The use of the random identifier mitigates and/or prevents any third party, such as a network hacker, an eavesdropper, and/or any other bad actors, from using network sniffing, log tracking, and/or the like to track the user device when connecting to various networks/network devices.

This summary is not intended to identify critical or essential features of the disclosure, but merely to summarize certain features and variations thereof. Other details and features will be described in the sections that follow.

### BRIEF DESCRIPTION OF THE DRAWINGS

The accompanying drawings, which are incorporated in and constitute a part of this specification, together with the description, serve to explain the principles of the methods and systems:
**FIG. 1A** shows an example system;
**FIG. 1B** shows an example system;
**FIG. 2** shows an example communication diagram;
**FIG. 3** shows an example communication diagram;
**FIG. 4** shows an example communication diagram;
**FIG. 5** shows an example communication diagram;
**FIG. 6** shows an example communication diagram;
**FIG. 7** shows a flowchart of an example method;
**FIG. 8** shows a flowchart of an example method;
**FIG. 9** shows a flowchart of an example method;
**FIG. 10** shows a flowchart of an example method;
**FIG. 11** shows a flowchart of an example method;
**FIG. 12** shows a flowchart of an example method;
**FIG. 13** shows a flowchart of an example method;
**FIG. 14** shows a flowchart of an example method; and
**FIG. 15** shows a block diagram of an example computing device.

### DETAILED DESCRIPTION

As used in the specification and the appended claims, the singular forms "a," "an," and "the" include plural referents unless the context clearly dictates otherwise. Ranges may be expressed herein as from "about" one particular value, and/or to "about" another particular value. When such a range is expressed, another configuration includes from the one particular value and/or to the other particular value. When values are expressed as approximations, by use of the antecedent "about," it will be understood that the particular value forms another configuration. It will be further understood that the endpoints of each of the ranges are significant both in relation to the other endpoint, and independently of the other endpoint.

"Optional" or "optionally" means that the subsequently described event or circumstance may or may not occur, and that the description includes cases where said event or circumstance occurs and cases where it does not.

Throughout the description and claims of this specification, the word "comprise" and variations of the word, such as "comprising" and "comprises," means "including but not limited to," and is not intended to exclude other components, integers or steps. "Exemplary" means "an example of" and is not intended to convey an indication of a preferred or ideal configuration. "Such as" is not used in a restrictive sense, but for explanatory purposes.

It is understood that when combinations, subsets, interactions, groups, etc. of components are described that, while specific reference of each various individual and collective combinations and permutations of these may not be explicitly described, each is specifically contemplated and described herein. This applies to all parts of this application including, but not limited to, steps in the described methods. Thus, if there are a variety of additional steps that may be performed it is understood that each of these additional steps may be performed with any specific configuration or combination of configurations of the described methods.

As will be appreciated by one skilled in the art, hardware, software, or a combination of software and hardware may be implemented. Furthermore, a computer program product on a computer-readable storage medium (e.g., non-transitory) having processor-executable instructions (e.g., computer software) embodied in the storage medium. Any suitable computer-readable storage medium may be utilized including hard disks, CD-ROMs, optical storage devices, magnetic storage devices, memresistors, Non-Volatile Random Access Memory (NVRAM), flash memory, or a combination thereof.

Throughout this application, reference is made to block diagrams and flowcharts. It will be understood that each block of the block diagrams and flowcharts, and combinations of blocks in the block diagrams and flowcharts, respectively, may be implemented by processor-executable instructions. These processor-executable instructions may be loaded onto a general-purpose computer, special purpose computer, or other programmable data processing apparatus to produce a machine, such that the processor-executable instructions which execute on the computer or other programmable data processing apparatus create a device for implementing the functions specified in the flowchart block or blocks.

These processor-executable instructions may also be stored in a computer-readable memory that may direct a computer or other programmable data processing apparatus to function in a particular manner, such that the processor-executable instructions stored in the computer-readable memory produce an article of manufacture including processor-executable instructions for implementing the function specified in the flowchart block or blocks. The processor-executable instructions may also be loaded onto a computer or other programmable data processing apparatus to cause a series of operational steps to be performed on the computer or other programmable apparatus to produce a computer-implemented process such that the processor-executable instructions that execute on the computer or other programmable apparatus provide steps for implementing the functions specified in the flowchart block or blocks.

Accordingly, blocks of the block diagrams and flowcharts support combinations of devices for performing the specified functions, combinations of steps for performing the specified functions and program instruction means for performing the specified functions. It will also be understood that each block of the block diagrams and flowcharts, and combinations of blocks in the block diagrams and flowcharts, may be implemented by special purpose hardware-based computer systems that perform the specified functions or steps, or combinations of special purpose hardware and computer instructions.

"Content items," as the phrase is used herein, may also be referred to as "content," "content data," "content information," "content asset," "multimedia asset data file," or simply "data" or "information". Content items may be any information or data that may be licensed to one or more individuals (or other entities, such as business or group). Content may be electronic representations of video, audio, text, and/or graphics, which may be but is not limited to electronic representations of videos, movies, or other multimedia, which may be but is not limited to data files adhering to MPEG2, MPEG, MPEG4 UHD, HDR, 4k, Adobe^{®} Flash^{®} Video (.FLV) format or some other video file format whether such format is presently known or developed in the future. The content items described herein may be electronic representations of music, spoken words, or other audio, which may be but is not limited to data files adhering to the MPEG-1 Audio Layer 3 (.MP3) format, Adobe^{®}, CableLabs 1.0,1.1, 3.0, AVC, HEVC, H.264, Nielsen watermarks, V-chip data and Secondary Audio Programs (SAP). Sound Document (.ASND) format or some other format configured to store electronic audio whether such format is presently known or developed in the future. In some cases, content may be data files adhering to the following formats: Portable Document Format (.PDF), Electronic Publication (.EPUB) format created by the International Digital Publishing Forum (IDPF), JPEG (.JPG) format, Portable Network Graphics (.PNG) format, dynamic ad insertion data (.csv), Adobe^{®} Photoshop^{®} (.PSD) format or some other format for electronically storing text, graphics and/or other information whether such format is presently known or developed in the future. Content items may be any combination of the above-described formats.

"Consuming content" or the "consumption of content," as those phrases are used herein, may also be referred to as "accessing" content, "providing" content, "viewing" content, "listening" to content, "rendering" content, or "playing" content, among other things. In some cases, the particular term utilized may be dependent on the context in which it is used. Consuming video may also be referred to as viewing or playing the video. Consuming audio may also be referred to as listening to or playing the audio.

This detailed description may refer to a given entity performing some action. It should be understood that this language may in some cases mean that a system (e.g., a computer) owned and/or controlled by the given entity is actually performing the action.

A user device (e.g., a mobile device, a smart device, a computer/computing device, a client device, etc.) may implement identifier randomization (e.g. a randomized MAC address, etc.) for security reasons, such as thwarting phishing and/or tracking efforts by nefarious third parties attempting to use a device identifier to build a history of device activity. The non-persistent nature of the random identifier may not facilitate (e.g., may not be configured to facilitate, may disable and/or may prevent) access to one or more identity-based services associated with the user device that rely on persistent/consistent identification of the user device. For example, a user device using a random identifier to access a public Wi-Fi network at an airport may be directed to a captive portal to submit credentials (e.g., login information, a password, etc.) each time the user device attempts to access the public Wi-Fi network because the network is unable to persist (e.g., store authorization of, etc.) the random identifier. Uniquely identifying a user device using a random identifier resolves such issues.

A user device (e.g., a mobile device, a smart device, a computer/computing device, a client device, etc.) may send a request to a network device (e.g., an access point, a gateway, a Wi-Fi server, a captive portal device, etc.) to connect to (e.g., establish a communication session with, etc.) a network (e.g., a private network, a public network, Internet, etc.) using a random identifier (e.g., a MAC address, an IMSI, an IMEI, etc.). For example, the user device may perform a handshake communication process (e.g., a Dynamic Host Configuration Protocol (DHCP) handshake, a Remote Authentication Dial-In User Service (RADIUS) handshake, a Challenge-Handshake Authentication Protocol (CHAP) session, a three-way handshake, etc.) and/or authentication scheme with the network device using the random identifier, and the network device may provide the user device a network address based on an acknowledgment of the random identifier. The user device may use the network address to send encrypted information to the network device. For example, the encrypted information may be sent via one or more of: HTTPS, EAP-TLS, SSL, WPA, WPA2, WPA3, WEP, combinations thereof, and/or the like. The encrypted information may include a persistent identifier (e.g., a MAC address, an IMSI, an IMEI, etc.) of the user device. The encrypted information may include, for example, packaged metadata, a digital certificate, an identity certificate, an SSL certificate, and/or the like.

The network device may decrypt the encrypted information, for example, using one or more cryptographic keys (e.g., public keys, a public/private key pair, etc.). The network device may determine the persistent identifier from the decrypted information. The persistent identifier and/or user device may be associated with one or more identity-based services, such as a login-less network connection and/or reconnection, one or more subscription services, parental controls, content/advertisement tracking, private network access (e.g., identifier-based routing to private SSIDs, etc.), and/or the like.

The network device may associate the random identifier with the persistent identifier. For example, the network device may populate a table comprising one or more fields wherein a first field of the one or more fields is populated with the random identifier and wherein a second field of the one or more fields is populated with the persistent identifier. The encrypted information may include a time window and/or expiry of the random identifier. The network device may determine the time window and/or the expiry of the random identifier from the decrypted information and associate the random identifier with the persistent identifier during the time window and/or prior to the expiry of the random identifier. The persistent identifier may enable the user device to access and/or participate in one or more identity-based services associated with the user device. The use of the random identifier mitigates and/or prevents any nefarious third party, such as a network hacker, an eavesdropper, and/or the like from using network sniffing, log tracking, and/or the like to track the identifier of the user device when connecting to various networks/network devices.

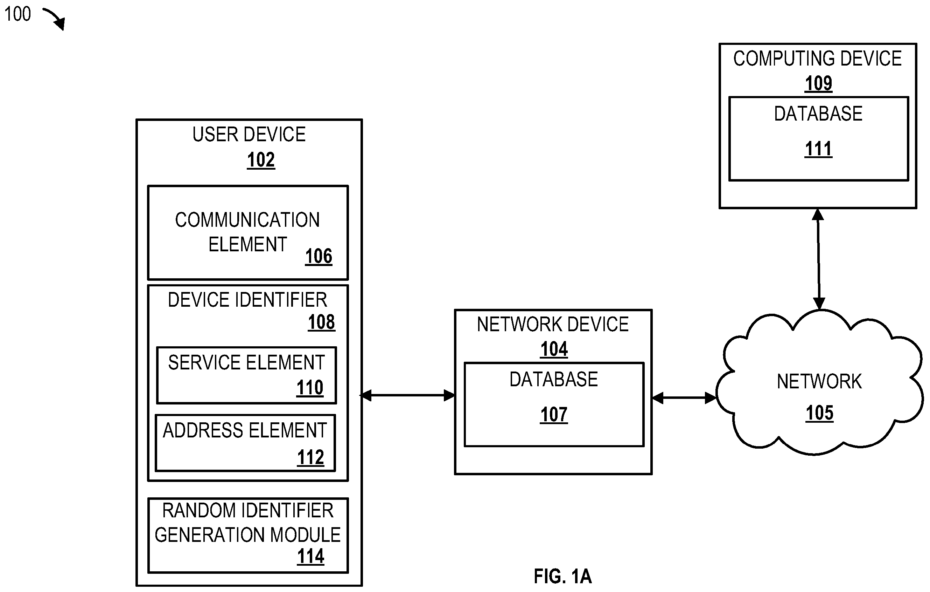

**FIG. 1A** shows an example system **100.** The system **100,** for example, may enable identity-based services using a random identifier. The system **100** may include a user device **102** (e.g., a mobile device, a smart device, a computer/computing device, a client device, etc.). The user device **102** may comprise a communication element **106** for providing an interface to a user to interact with the user device **102** and/or any other device/component of the system **100.** The communication element **106** may be any interface for presenting and/or receiving information to/from the user, such as information associated with one or more identity-based services that include, for example, a login-less network connection and/or reconnection, one or more subscription services, parental controls, content/advertisement tracking, private network access (e.g., identifier-based routing to private SSIDs, etc.), and/or the like. The communication element 106 may request or query various files from a local source and/or a remote source. The communication element **106** may transmit data to a local or remote device, such as and/or any device/component of the system **100.** The communication element **106** may include a communication interface such as a web browser (e.g., Internet Explorer^{®}, Mozilla Firefox^{®}, Google Chrome^{®}, Safari^{®}, or the like). Other software, hardware, and/or interfaces may be used to provide communication between the user and one or more of the user device **102,** a network **105** (e.g., Wi-Fi network, Internet, a private network, a public network, a content delivery network, cellular network, etc.), and any other device/component of the system **100.**

The user device **102** may be associated with a user identifier or device identifier **108.** The device identifier **108** may be any identifier, token, character, string, or the like, for differentiating one user or user device (e.g., user device 102) from another user or user device. The device identifier **108** may identify a user or user device as belonging to a particular class of users or user devices. The device identifier **108** may comprise information relating to the user device such as a manufacturer, a model or type of device, a service provider associated with the user device **102,** a state of the user device **102,** a locator, and/or a label or classifier. Other information may be represented by the device identifier **108.**

The device identifier **108** may comprise a service element **110** and an address element **112.** The service element **110** may comprise an identification of a service provider associated with the user device **102** and/or with the class of user device **102.** The class of the user device **102** may be related to a type of device, the capability of the device, the type of service being provided, and/or a level of service (e.g., business class, service tier, service package, etc.). The service element **110** may comprise information relating to and/or provided by a communication service provider (e.g., Internet service provider) that is providing or enabling data flow such as communication services to the user device **102.** The service element **110** may comprise information relating to a preferred service provider for one or more particular services relating to the user device **102.** The service element **110** may be used to identify or retrieve data from the address element **112,** or vice versa. Other information may be represented by and/or associated the service element **110.**

The address element **112** may include, provide, and/or be associated with an internet protocol (IP) address, a network address, a MAC address, an IMSI, an IMEI, an Internet address, or the like. The address element **112** may be relied upon to establish a communication session between the user device **102,** any other device/component of the system **100,** other devices, and/or networks. The address element **112** may be used as an identifier or locator of the user device **102.** The address element **112** may be persistent for a particular network.

The device identifier **108** (e.g., the address element **112,** the service element **110,** etc.) may be stored remotely from the user device **102** and retrieved by one or more devices such as the user device **102** and/or any other device/component of the system **100.** For example, the device identifier **108** may be a persistent identifier that may be stored remotely from the user device **102** and retrieved by one or more devices such as the user device **102** and/or any other device/component of the system **100** to associate, access, engage, and/or participate with one or more identity-based services. The device identifier **108** enables the user device **102** to associate, access, engage, and/or participate with one or more identity-based services, such as a login-less network connection and/or reconnection, one or more subscription services, parental controls, content/advertisement tracking, private network access (e.g., identifier-based routing to private SSIDs, etc.), and/or the like.

The user device may include a random identifier generator (RIG) **114.** The RIG **114** may generate random identifiers, pseudo-random identifiers, and/or the like associated with the user device **102,** such as a random/pseudo-random MAC address, a random/pseudo-random IMSI, a random/pseudo-random IMEI, and/or any other random/pseudo-random identifier. The RIG **114** may use any algorithm and/or method to generate random identifiers, pseudo-random identifiers, and/or the like. The RIG **114** may use the device identifier **108** as a template for generating random identifiers, pseudo-random identifiers, and/or the like. For example, a random identifier may be determined by manipulating, updating, and/or changing one or more elements (e.g., values, numbers, characters, symbols, etc.) of the device identifier **108** to a random element. For example, a MAC address, IMSI, IMEI, or other identifier associated with the user device may be input into a hash function and the random identifier may be. The hash function may comprise any suitable hash function. For example, the has function may comprise an identity hash function, a trivial hash function, a folding hash function, a mid-squares hash function, a division hash function, an algebraic hash function, a unique permutation hash function, a multiplicative hash function, a Fibonacci hash function, a Zobrist hash function or any other suitable hash function. The RIG **114** may determine a random identifier based on completely random elements represented in any format. The RIG **114** may determine a random identifier based on one or more original equipment manufacturer (OEM) configurations, protocols, and/or instructions.

Any identifier generated by the RIG **114** may be associated with a time window and/or expiry. For example, the time window and/or expiry may indicate a duration during which a random identifier, a pseudo-random identifier, and/or the like generated by the RIG **114** is valid and/or available for the user device **102** to use when connecting (e.g., establishing a communication session, associating with a network device, etc.) and/or reconnecting to a network, such as the network **105** (e.g., Wi-Fi network, Internet, a private network, a public network, a content delivery network, cellular network, etc.). The time window and/or expiry may be preset and/or preconfigured with the user device **102,** for example, based on one or more original equipment manufacturer (OEM) configurations, protocols, and/or instructions. The time window and/or expiry may comprise an arbitrary and/or randomly determined time window and/or expiry.

The user device **102** may use a random identifier (e.g., a random MAC address, a random IMSI, a random IMEI, etc.) generated by the RIG **114** when probing for new networks (e.g., when the user device **102** is associated with a network, etc.). For example, the user device **102** may send a request to a network device **104** to connect to (e.g., establish a communication session with, etc.) the network **105.** The request may include a random identifier. For example, to associate with the network **105,** the user device may perform a handshake communication process (e.g., a Dynamic Host Configuration Protocol (DHCP) handshake, a Remote Authentication Dial-In User Service (RADIUS) handshake, a Challenge-Handshake Authentication Protocol (CHAP) session, a three-way handshake, etc.) and/or authentication scheme with the network device **104** using the random identifier.

The network device **104** may include an access point, a gateway, a Wi-Fi server, and/or the like associated with the network **105.** The network device **104** may be configured with a first service set identifier (SSID) (e.g., associated with a user network or private network) to function as a local network (of and/or associated with the network **105)** for the user device **102.** The local network may be an identity-based service network associated with the device identifier **108** and/or the user device **102.** The network device **104** may be configured with a second service set identifier (SSID) (e.g., associated with a public/community network or a hidden network) to function as a secondary network or redundant network (of and/or associated with the network **105).**

The network device **104,** based on a successful handshake communication process (e.g., a Dynamic Host Configuration Protocol (DHCP) handshake, a Remote Authentication Dial-In User Service (RADIUS) handshake, a Challenge-Handshake Authentication Protocol (CHAP) session, a three-way handshake, etc.) and/or authentication scheme with the user device **102,** may provide the user device **102** a network address, such as an internet protocol (IP) address, and/or the like, along with any additional configuration information associated with the network **105.** For example, the network device **104,** based on the request from the user device **102** to connect to the network **105,** may request and receive authentication information, such as packaged metadata, a public certificate, a digital certificate, an identity package/certificate, an SSL certificate, and/or the like, from a trustworthy central authority (not shown). The authentication information may include and/or be associated with one or more encryption elements, such as one or more public/private cryptographic key pairs, a session key, and/or the like. The trustworthy central authority may include an authentication authority/device, a central digital certification authority, and/or the like. The network device **104** may send the network address and the authentication information to the user device **102.**

The user device **102** may use the network address and the authentication information to send encrypted information to the network device **104.** The user device **102** may use the encryption elements included with the authentication information to encrypt information associated with the user device **102.** For example, the user device **102** may use the public cryptographic key and/or the like included with the authentication information to encrypt information associated with the user device **102.** The encrypted information may include the device identifier **108** (or any other persistent identifier of the user device **102),** session information (e.g., a session key, a key identifier, etc.) and/or stateful information, a signature (e.g., of an entity that has verified/issued the authentication information, etc.) and/or any other authorization indicator, and a time window that indicates a duration during which the authentication information is valid.

The network address and the authentication information enables the user device **102** to securely send the encrypted information, such as via a secure channel of the network **105.** For example, the user device **102** may send the encrypted information to the network device **104** via one or more of: HTTPS, EAP-TLS, SSL, WPA, WPA2, WPA3, WEP, combinations thereof, and/or the like. The network device **104** may decrypt the encrypted information. For example, the network device **104** may use a private cryptographic key associated with the public cryptographic key included with the authentication information to decrypt the encrypted information. For example, the network device may be configured to use the hash function to determine, based on the random identifier, the persistent identifier. The hash function may comprise any suitable hash function. For example, the has function may comprise an identity hash function, a trivial hash function, a folding hash function, a mid-squares hash function, a division hash function, an algebraic hash function, a unique permutation hash function, a multiplicative hash function, a Fibonacci hash function, a Zobrist hash function or any other suitable hash function.

The network device **104** may determine the device identifier **108** (e.g., the persistent identifier of the user device **102,** etc.) from the decrypted information. The network device **104** may associate the random identifier received from the user device **102** with the device identifier **108.** The network device **104** may include a database **107.** The database **107** may store a mapping/association (e.g., an indication of a mapping/association, etc.) between the random identifier and the device identifier **108.** The network device **104** may store the mapping/association between the random identifier and the device identifier **108** for a time period and/or duration. For example, network device **104** may store the mapping/association between the random identifier and the device identifier **108** for a time period and/or duration indicated by the encrypted information received from the user device, for a time period and/or duration determined based on a network connection history associated with the device identifier **108,** for a time period and/or duration determined based on one or more network conditions (e.g., latency, bandwidth, fault history, etc.), and/or any time period and/or duration. The mapping/association between the random identifier and the device identifier **108** may be implemented, for example, for a duration and/or as desired by a service provider, a network controller, the network device **104,** and/or any other device/component of the system **100.** The mapping/association between the random identifier and the device identifier **108** may be deleted each time a communication session between the user device **102** and the network **105** terminates and/or is terminated. The mapping/association between the random identifier and the device identifier **108** may be based on a time/duration associated with the DHCP lease and/or the like.

The network device **104,** based on the mapping/association between the random identifier and the device identifier **108,** may enable the user device **102** to connect (e.g., establish a communication session, etc.) to the network **105** using the random identifier. For example, the user device **102** may send/receive physical layer and/or data layer data/information to/from the network **105** and/or any other device/component of the system **100** using the random identifier.

The network device **104** may send the mapping/association (e.g., an indication of the mapping/association, etc.) between the random identifier and the device identifier **108** to a computing device **109.** The computing device **109** may include a Wi-Fi server, a content source, an application server, a service provider device, a router, a local area network (LAN) management/control device, and/or the like. The computing device **109** may include a database **111.** The computing device **109** may store the mapping/association between the random identifier and the device identifier **108** for the time period and/or duration in the database **111.** The computing device **109** may be associated with, provide, facilitate, and/or service one or more identity-based services associated with the user device **102** and/or the device identifier **108,** such as a login-less network connection and/or reconnection, one or more subscription services, parental controls, content/advertisement tracking, private network access (e.g., identifier-based routing to private SSIDs, etc.), and/or the like.

The network device 104, based on the mapping/association between the random identifier and the device identifier 108, enables the user device 102 to connect (e.g., establish a communication session, etc.) to the network 105 using the random identifier. For example, the user device **102** may send/receive physical layer and/or data layer data/information to/from the network **105** and/or any other device/component of the system **100** using the random identifier. The mapping/association between the random identifier and the device identifier **108** enables the user device **102** to access and/or associate/participate with one or more identity-based services associated with, provided/facilitated by, or serviced by the network device **104,** the computing device **109,** and/or any other device/component of the system **100,** such as a login-less network connection and/or reconnection to the network **105,** one or more subscription services, parental controls, content/advertisement tracking, private network access (e.g., identifier-based routing to private SSIDs, etc.), and/or the like. For example, the network device **104,** based on the mapping/association between the random identifier and the device identifier **108,** may enable the user device **102,** to connect to the local network (of and/or associated with the network **105)** associated with the device identifier **108** and/or the user device **102;** the computing device **109,** based on the mapping/association between the random identifier and the device identifier **108,** may provide the user device **102** access to one or more content items, resources, and/or the like associated with the device identifier **108;** the user device **102,** based on the mapping/association between the random identifier and the device identifier **108,** may be restricted (e.g., via one or more parental control, etc.) from accessing one or more resources/files, websites, and/or the like via the network **105.**

The use of the random identifier mitigates and/or prevents any nefarious third party, such as a network hacker, an eavesdropper, and/or the like from using network sniffing, log tracking, and/or the like to track the device identifier **108** when the user device **102** communicates with the network device **104** and/or connects/reconnects to any device/component of the system **100.**

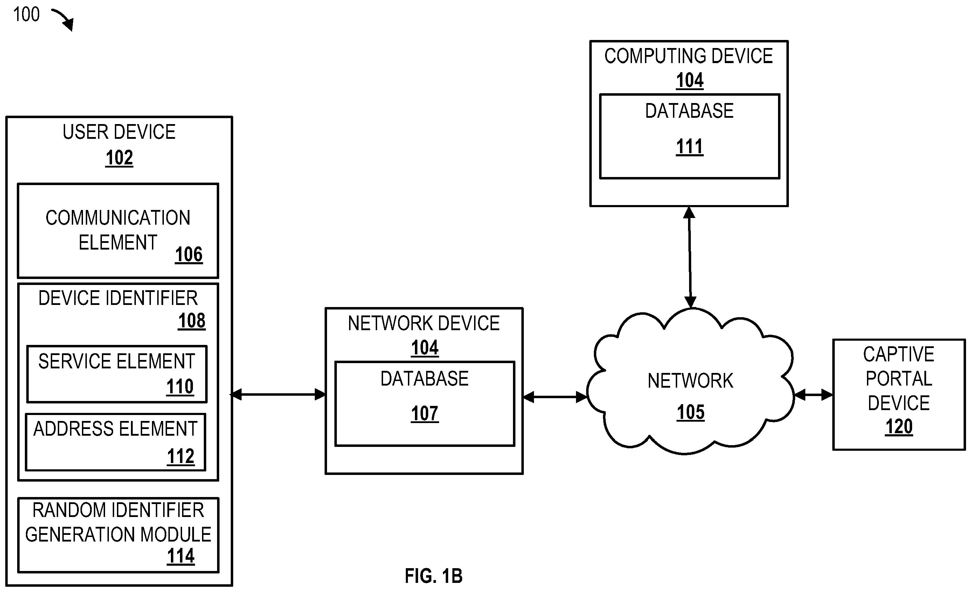

**FIG. 1B** shows the example system **100** for enabling identity-based services using a random identifier. The system **100** includes a captive portal device **120.**

As described, based on an association (handshake) process between the user device **102** and the network device **104** when the user device is attempting an initial connection to the network **105,** the network device **104** may send a network address and the authentication information to the user device **102.**

The user device **102** may use the network address and the authentication information to send encrypted information. The user device **102** may use encryption elements included with authentication information received from the network device **104** to encrypt information associated with the user device **102.** For example, the user device **102** may use the public cryptographic key and/or the like included with the authentication information to encrypt information associated with the user device **102.** The encrypted information may include the device identifier **108** (or any other persistent identifier of the user device **102),** session information (e.g., a session key, a key identifier, etc.) and/or stateful information, a signature (e.g., of an entity that has verified/issued the authentication information, etc.) and/or any other authorization indicator, and a time window that indicates a duration during which the authentication information is valid.

The network device **104** may route the encrypted information, via a secure channel of the network **105,** to the captive portal device **120.** For example, the user device **102** may send the encrypted information that is routed to the captive portal device **120** via one or more of HTTPS, EAP-TLS, SSL, WPA, WPA2, WPA3, WEP, combinations thereof, and/or the like. The captive portal device **120** may decrypt the encrypted information. For example, the captive portal device **120** may use a private cryptographic key associated with the public cryptographic key included with the authentication information to decrypt the encrypted information.

The captive portal device **120** may decrypt the encrypted information and determine the device identifier **108** (e.g., the persistent identifier of the user device **102,** etc.). The captive portal device **120** may determine a status of the device identifier **108.** The captive portal device **120** may determine whether the device identifier **108** is associated with a plurality of user devices authorized to access/connect to the network **105.** For example, the captive portal device **120** may determine whether the device identifier **108** is associated with a whitelist of user devices authorized to access/connect to the network **105.** If the user device **102** is not associated with the plurality of user devices authorized to access/connect to the network **105,** the captive portal device **120** may request one or more authentication credentials from the user device **102.**

For example, the captive portal device **120** may generate a login element and/or the like, which includes a graphical user interface that is configured to accept authentication credentials from the user device **102** and/or a user of the user device **102,** such as a username, a password, and/or any other type of authentication credential. Any method may be used to receive authentication credentials from the user device **102.** The captive portal device **120** may send the login element to the network device **104** and the network device may route the login element to the user device **102.** The user device **102** may provide, via the login element, authentication credentials. The network device **104** may send the authentication credentials to the captive portal device **120.** The captive portal device **120,** based on receiving the authentication credentials, may associate the device identifier **108** with the plurality of user devices authorized to access the network **105.** The captive portal device **120** may send an indication of the association between the device identifier **108** and the plurality of user devices authorized to access the network **105** to the network device **104.** The network device **104,** based on the indication of the association between the device identifier **108** and the plurality of user devices authorized to access the network **105,** may establish (and/or enable to be established) a connection and/or communication session between the user device **102,** the network **105,** and/or any other device/component of the system **100.** The connection and/or communication session between the user device **102,** the network **105,** and/or any other device/component of the system **100** may be terminated.

The user device **102** may send a request to the network device **104** to reconnect and/or re-establish a communication session between the user device **102,** the network **105,** and/or any other device/component of the system **100.** Similar actions/functions, as described for initially connecting and/or establishing a communication session between the user device **102,** the network **105,** and/or any other device/component of the system **100** may be performed by the network device **104** and/or captive portal device **120** in response to the request to reconnect and/or re-establish a communication session between the user device **102,** the network **105,** and/or any other device/component of the system **100.**

The captive portal device **120** may decrypt the encrypted information and determine the device identifier **108** (e.g., the persistent identifier of the user device **102,** etc.). The captive portal device **120** may determine a status of the device identifier **108.** The captive portal device **120** may determine that the device identifier **108** is associated with the plurality of user devices authorized to access/connect to the network **105.** The captive portal device **120** may send an indication of the association between the device identifier **108** and the plurality of user devices authorized to access the network **105** to the network device **104.** The network device **104,** based on the indication of the association between the device identifier **108** and the plurality of user devices authorized to access the network **105,** may establish (and/or enable to be established) another connection and/or communication session between the user device **102,** the network **105,** and/or any other device/component of the system **100.**

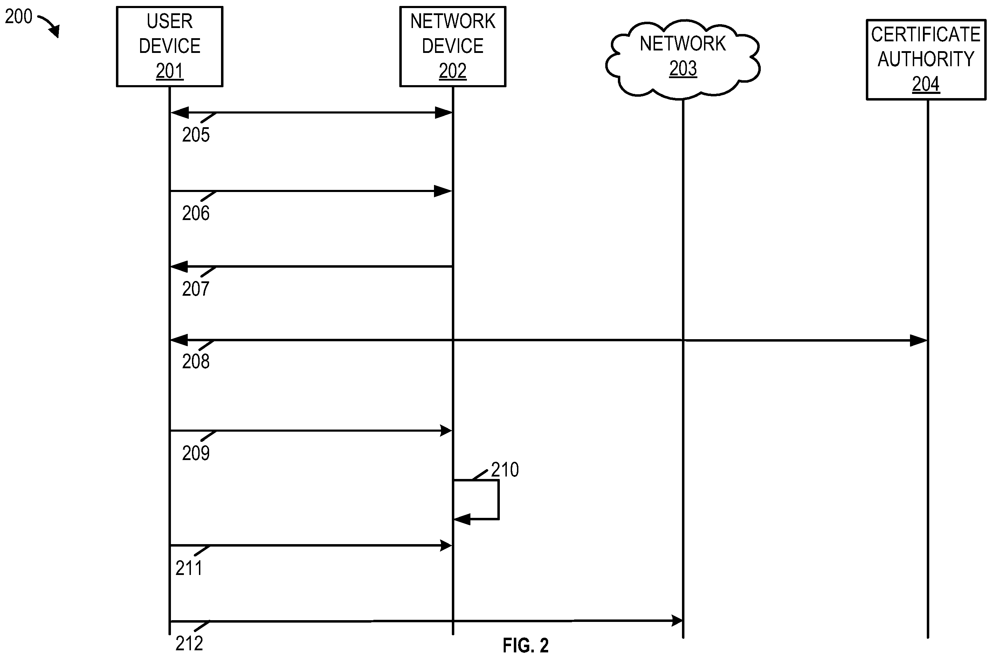

**FIG. 2** shows an example communication diagram **200.** The example communication diagram **200** describes a scenario where a user device (e.g., a mobile device, a smart device, a computer/computing device, a client device, etc.) is attempting an initial connection to a network, using a random identifier of the user device, to associate, access, engage, and/or participate with one or more identity-based services via the network and/or one or more devices/components of the network.

A user device **201** (e.g., a mobile device, a smart device, a computer/computing device, a client device, etc.) may broadcast and/or otherwise send probe requests using a random identifier (e.g., a random MAC address, a random IMSI, a random IMEI, etc.) of the user device **201** to determine a network device within a communication range of the user device **201** that may facilitate a connection to a network **203** (e.g., Wi-Fi network, Internet, a private network, a public network, a content delivery network, cellular network, etc.). A network device **202** (e.g., an access point, a gateway, a Wi-Fi server, etc.) may be within the communication range of the user device **201,** and may respond to the probe request. At **205,** the user device **201** and the network device **202** may participate in an authentication (e.g., open system authentication, etc.) and an association (e.g., registration, etc.) process using the random identifier of the user device **201** to identify the user device **201** to the network device **202.** The random identifier may be unencrypted. For example, the authentication and association process may exclude and/or not require any data encryption and/or security. The network device may employ any method for determining whether to grant an association with the user device **201.**

At **206,** based on successful authentication/association between the user device **201** and the network device **202,** the user device **201** and the network device **202** may communicate with each other using a communication protocol and/or network management protocol, such as Dynamic Host Configuration Protocol (DHCP), and/or the like. For example, the user device **201** may send a discover message (e.g., DHCP Discover, etc.), such as a request for a network address (e.g., an IP address lease request, etc.).

At **207,** based on receiving the discover message, the network device **202** may send an offer message (e.g., DHCP Offer, etc.), such as a response. The response may that include the random identifier of the user device **201,** the requested network address, and a time window (e.g., lease duration, etc.) associated with the network address. The time window may indicate a duration during which the network address may be used to connect to the network **203.** The offer message may also include a public certificate (e.g., a digital certificate, an identity certificate, an SSL certificate, etc.). For example, at **208,** the network device **202** may request the public certificate and/or a resource locator (e.g., URL, etc.) for the public certificate from a certificate issuing entity/authority **204,** may receive the requests public certificate and/or the resource locator for the public certificate and may send the public certificate and/or the resource locator for the public certificate to the user device **201** along with the offer message. The public certificate may include and/or be associated with one or more cryptographic keys (e.g., public keys, a public/private key pair, etc.) that may be used to encrypt/decrypt data/information associated with the public certificate.

The user device **201** may receive the public certificate and/or the resource locator for the public certificate to the user device **201** along with the offer message. The user device **201** may verify the integrity of the public certificate and/or the resource locator for the public certificate. For example, the user device **201** may determine whether the public certificate and/or the resource locator for the public certificate is associated with a list of trusted public certificates and/or the resource locators for public certificates.

At **209,** in response to the offer message and/or verifying the integrity of the public certificate and/or the resource locator for the public certificate, the user device **201** may send an indication (e.g., DHCP Request, etc.) to the network device **202** accepting the network address offered by the network device **202.** The user device **201** may use the network address to send encrypted information to the network device **202.** For example, the encrypted information may be sent via one or more of: HTTPS, EAP-TLS, SSL, WPA, WPA2, WPA3, WEP, combinations thereof and/or the like. The encrypted information may include a persistent identifier (e.g.. a MAC address, an IMSI, an IMEI, etc.) of the user device **201.** The encrypted information may include, for example, packaged metadata based on and/or associated with the public certificate received from the network device **202.** The encrypted information may include an indication of a time window. The time window may be any time during which the random identifier is to be associated with the persistent identifier.

The network device **202** may decrypt the encrypted information, for example, using one or more cryptographic keys (e.g., public keys, a public/private key pair, etc.). The network device **202** may determine the persistent identifier from the decrypted information. The encrypted information may include a time window and/or expiry of the random identifier. The network device **202** may determine the time window and/or the expiry of the random identifier from the decrypted information and associate the random identifier with the persistent identifier during the time window and/or prior to the expiry of the random identifier.

At **210,** the network device **202** may store mapping and/or indication of an association between the random identifier and the persistent identifier. The network device **202** may associate the random identifier with the persistent identifier. The use of the random identifier mitigates and/or prevents any nefarious/malicious third party, such as a network hacker, an eavesdropper, and/or the like from using network sniffing, log tracking, and/or the like to track the identifier of user device **201** when connecting to various networks/network devices (e.g., the network device **202,** etc.). The association between the random identifier and the persistent identifier may enable the user device **201** to access and/or participate in one or more identity-based services associated with the user device **201.**

At **211,** the network device **202,** based on the mapping and/or indication of an association between the random identifier and the persistent identifier, may enable the user device **201** to connect (e.g., establish a communication session, etc.) to the network **203** using the random identifier. For example, the user device **201** may send/receive physical layer (OSI Layer 1) and/or data layer (OSI Layer 2) data/information to/from the network **203** and/or any other device/component of the system **100** using the random identifier.

At **212,** the user device **201** may associate, access, engage, and/or participate with one or more identity-based services via the network **203.** The persistent identifier and/or user device **201** may be associated with one or more identity-based services, such as a login-less network connection and/or reconnection, one or more subscription services, parental controls, content/advertisement tracking, private network access (e.g., identifier-based routing to private SSIDs, etc.), and/or the like. For example: the network device **202,** based on the mapping/association between the random identifier and the persistent identifier, may enable the user device **201,** to connect to a local network (of and/or associated with the network **203)** associated with the persistent identifier and/or the user device **201;** a Wi-Fi server, a content delivery device, an application server/device, a service provider device, a router, a local area network (LAN) management/control device, and/or the like, based on the mapping/association between the random identifier and the persistent identifier, may provide the user device **201** access to one or more content items, resources, and/or the like associated with the persistent identifier; the user device **201,** based on the mapping/association between the random identifier and the persistent identifier, may be restricted (e.g., via one or more parental control, etc.) from accessing one or more resources/files, websites, and/or the like via the network **203.** The user device **201** may associate, access, engage, and/or participate with any type of identity-based service based on the persistent identifier.

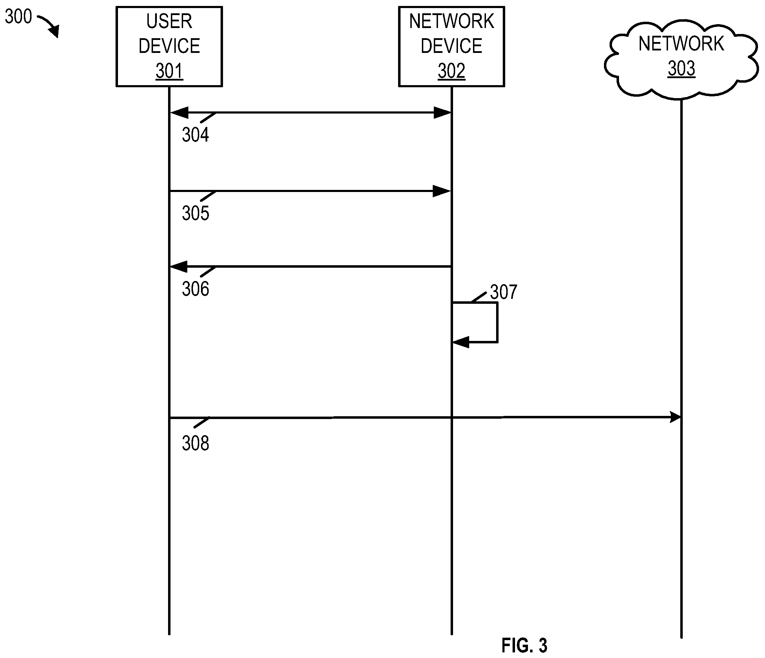

**FIG. 3** shows an example communication diagram **300** for enabling identity-based services using a random identifier. The example communication diagram **300** describes a scenario where a user device (e.g., a mobile device, a smart device, a computer/computing device, a client device, etc.) is attempting a subsequent connection to a network, after initially connecting to the network, using a random identifier of the user device, to associate, access, engage, and/or participate with one or more identity-based services via the network and/or one or more devices/components of the network.

A user device **301** (e.g., a mobile device, a smart device, a computer/computing device, a client device, etc.) may broadcast and/or otherwise send probe requests using a random identifier (e.g., a random MAC address, a random IMSI, a random IMEI, etc.) of the user device **301** to determine a network device within a communication range of the user device **301** that may facilitate a connection to a network **303** (e.g., Wi-Fi network, Internet, a private network, a public network, a content delivery network, cellular network, etc.). The random identifier may be the same random identifier that the user device **301** used in the initial connection to the network **303** or a new random identifier. As explained herein in further detail, a temporary mapping between a persistent identifier (e.g., a MAC address, an IMSI, an IMEI, etc.) of the user device **301** and a random identifier may be stored, for example in a database associated with and/or accessible by a network device **302,** for a faster authentication between the user device **301** and the network device **302.**

The network device **302** (e.g., an access point, a gateway, a Wi-Fi server, etc.) may be within the communication range of the user device **301** and may respond to the broadcast probe request. At **304,** the user device **301** and the network device **302** may participate in an authentication (e.g., open system authentication, etc.) and an association (e.g., registration, etc.) process using the random identifier of the user device **301** to identify the user device **301** to the network device **302.** The random identifier may be unencrypted. For example, the authentication and association process may exclude and/or not require any data encryption and/or security. The network device may employ any method for determining whether to grant an association with the user device **301.**

At **305,** based on successful authentication/association between the user device **301** and the network device **302,** the user device **301** and the network device **302** may communicate with each other using a communication protocol and/or network management protocol, such as Dynamic Host Configuration Protocol (DHCP), and/or the like. For example, the user device **301** may send a discover message (e.g., DHCP Discover, etc.), such as a request for a network address (e.g., an IP address lease request, etc.).

At **306,** based on the discover message, the network device **302** may send an offer message (e.g., DHCP Offer, etc.), such as a response that includes the random identifier of the user device **301,** the requested network address, and a time window (e.g., lease duration, etc.) associated with the network address. The time window may indicate a duration during which the network address may be used to connect to the network **303.**

At **307,** the network device **302** may determine a mapping and/or indication of an association between the random identifier and the persistent identifier of the user device **301.** The network device **302** may determine that mapping and/or an indication of an association between the random identifier and the persistent identifier is stored, for example, in a database associated with the network device. The mapping and/or indication of an association between the random identifier and the persistent identifier may enable the user device **301** to access and/or participate in one or more identity-based services associated with the user device **301.** The random identifier may be stored with a mapping to the persistent identifier (e.g., a MAC address, an IMSI, an IMEI, etc.) of the user device **201,** for example, based on a previous connection to the network **303.**

At **308,** the user device **301** may associate, access, engage, and/or participate with one or more identity-based services via the network **303.** The persistent identifier and/or user device **301** may be associated with one or more identity-based services, such as a login-less network connection and/or reconnection, one or more subscription services, parental controls, content/advertisement tracking, private network access (e.g., identifier-based routing to private SSIDs, etc.), and/or the like. For example, the network device **302,** based on the mapping/association between the random identifier and the persistent identifier, may enable the user device **301,** to connect to a local network (of and/or associated with the network **303)** associated with the persistent identifier and/or the user device **301;** a Wi-Fi server, a content delivery device, an application server/device, a service provider device, a router, a local area network (LAN) management/control device, and/or the like, based on the mapping/association between the random identifier and the persistent identifier, may provide the user device **301** access to one or more content items, resources, and/or the like associated with the persistent identifier; the user device **301,** based on the mapping/association between the random identifier and the persistent identifier, may be restricted (e.g., via one or more parental control, etc.) from accessing one or more resources/files, websites, and/or the like via the network **303.** The user device **301** may associate, access, engage, and/or participate with any type of identity-based service based on the persistent identifier.

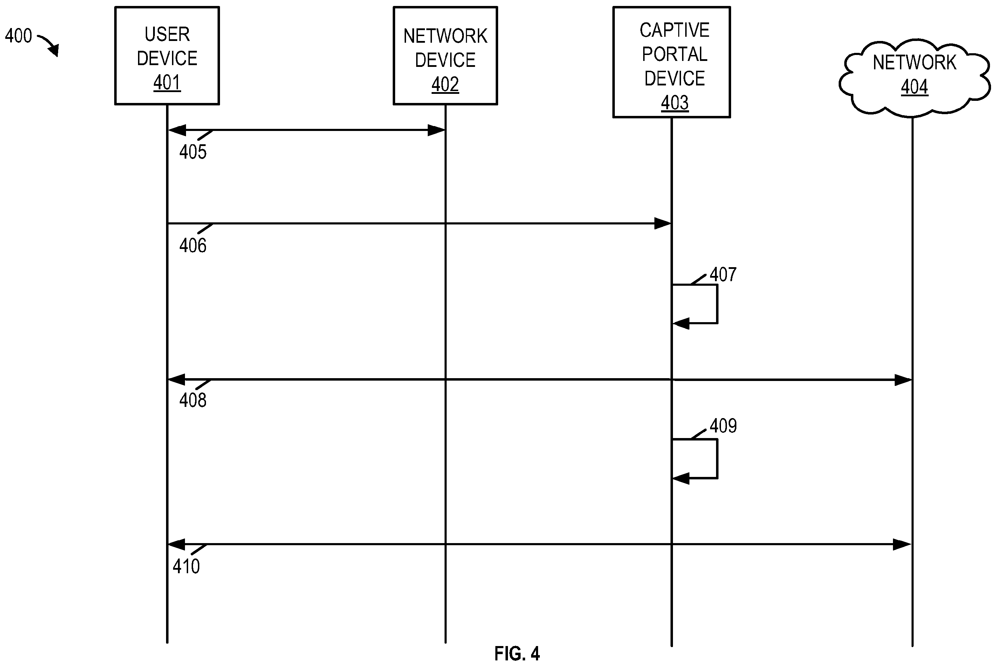

**FIG. 4** shows an example communication diagram **400.** The example communication diagram **400** describes a scenario where a user device (e.g., a mobile device, a smart device, a computer/computing device, a client device, etc.) is attempting an initial connection to a network, such as a public Wi-Fi network, using a random identifier of the user device, to associate, access, engage, and/or participate with one or more identity-based services via the network and/or one or more devices/components of the network. Uniquely identifying a user device using a random identifier resolves such issues.

A user device **401** (e.g., a mobile device, a smart device, a computer/computing device, a client device, etc.) may broadcast and/or otherwise send a probe request comprising a random identifier (e.g., a random MAC address, a random IMSI, a random IMEI, etc.) of the user device **401.** Based on the probe request, the user device **401** may determine a network device within communication range of the user device **401** that may facilitate a connection to a network **404** (e.g., Wi-Fi network, Internet, a private network, a public network, a content delivery network, cellular network, etc.). A network device **402** (e.g., an access point, a gateway, a Wi-Fi server, etc.) may be within the communication range of the user device **401** and may respond to the probe request. Based on the response to the probe request, the user device **401** may perform a handshake communication process (e.g., discovery, offer, request, acknowledgment, three-way handshake, etc.) with the network device **402** using the random identifier to authenticate the user device **401** and associate the user device **401** with the network device **402.** The network device **402** may provide the user device **401** a network address (e.g., IP address, etc.) based on an acknowledgment of the random identifier.

The user device **401** and the network device **402,** based on successful authentication/association between the user device **401** and the network device **402,** may communicate with each other using a communication protocol and/or network management protocol, such as Dynamic Host Configuration Protocol (DHCP), and/or the like. For example, the user device **401** may send a discover message (e.g., DHCP Discover, etc.), such as a request for a network address (e.g., an IP address lease request, etc.). The network device **402** may receive the discover message and send with an offer message (e.g., DHCP Offer, etc.), such as a response that includes the random identifier of the user device **401,** the requested network address, and a time window (e.g., lease duration, etc.) associated with the network address. The time window may indicate a duration during which the network address may be used to connect to the network **404.**

The offer message may include a public certificate (e.g., a digital certificate, an identity certificate, an SSL certificate, etc.). For example, the network device **402** may request the public certificate and/or a resource locator (e.g., URL, etc.) for the public certificate from a certificate issuing entity/authority. The network device **402** may send the public certificate and/or the resource locator for the public certificate to the user device **401** along with the offer message. The public certificate may include and/or be associated with one or more cryptographic keys (e.g., public keys, a public/private key pair, etc.) that may be used to encrypt/decrypt data/information associated with the public certificate.

The user device **401** may receive the public certificate and/or the resource locator for the public certificate to the user device **401** along with the offer message. The user device **401** may verify the integrity of the public certificate and/or the resource locator for the public certificate. For example, the user device **401** may determine whether the public certificate and/or the resource locator for the public certificate is associated with a list of trusted public certificates and/or the resource locators for public certificates.

At **405,** in response to the offer message and/or verifying the integrity of the public certificate and/or the resource locator for the public certificate, the user device **401** may send a request (e.g., DHCP Request, etc.) to the network device **402** accepting the network address offered by the network device **402.** The user device may use the network address to send encrypted information to the network device **402.** For example, the encrypted information may be sent via one or more of HTTPS, EAP-TLS, SSL, WPA, WPA2, WPA3, WEP, combinations thereof, and/or the like. The encrypted information may include a persistent identifier (e.g., a MAC address, an IMSI, an IMEI, etc.) of the user device **401.** The encrypted information may include, for example, packaged metadata based on and/or associated with the public certificate received from the network device **402.**

At **406,** the network device **402** may route/send the request to a captive portal device **403.** At **407,** the captive portal device **403** may decrypt the encrypted information, for example, using one or more cryptographic keys (e.g., public keys, a public/private key pair, etc.). The captive portal device **403** may determine the persistent identifier from the decrypted information. The captive portal device **403** may determine a status of the persistent identifier. The captive portal device **403** may determine that the persistent identifier is not associated with a plurality of user devices authorized to access/connect to the network **404.** For example, the captive portal device **403** may determine that the persistent identifier is not associated with a whitelist of user devices authorized to access/connect to the network **404.**

At **408,** the captive portal device **403,** based on determining that the persistent identifier is not associated with the plurality of user devices authorized to access/connect to the network **404,** may request one or more authentication credentials from the user device **401.** For example, the captive portal device **403** may generate a login element and/or the like, that includes a graphical user interface that is configured to accept authentication credentials from the user device **401** and/or a user of the user device **401,** such as a username, a password, and/or any other type of authentication credential. The captive portal device **403** may send a request for authentication credentials, for example via the login element, to the network device **402** and the network device may route the request to the user device **401.** The user device **401** may provide, for example via the login element, the authentication credentials. The network device **402** may send the authentication credentials to the captive portal device **403.**

At **409,** the captive portal device **403,** based on receiving the authentication credentials, may associate the persistent identifier with the plurality of user devices authorized to access the network **404.** For example, the captive portal device **403** may associate the persistent identifier with the whitelist of user devices authorized to access/connect to the network **404.**

At **410,** the user device **401** may connect to and/or communicate with the network **404** and receive (e.g., associate with, access, engage, participate with, etc.) one or more identity-based services. For example, the captive portal device **403** may send an indication of the association between the persistent identifier and the whitelist to the network device **402.** The network device **402,** based on the indication of the association between the persistent identifier and the whitelist, may establish (and/or enable to be established) a connection and/or communication session between the user device **401** and the network **404.**

The connection and/or communication session between the user device **401** and the network **404** enables the user device **401** to receive (e.g., associate with, access, engage, participate with, etc.) the one or more identity-based services, such as a login-less network connection and/or reconnection, one or more subscription services, parental controls, content/advertisement tracking, private network access (e.g., identifier-based routing to private SSIDs, etc.), and/or the like.

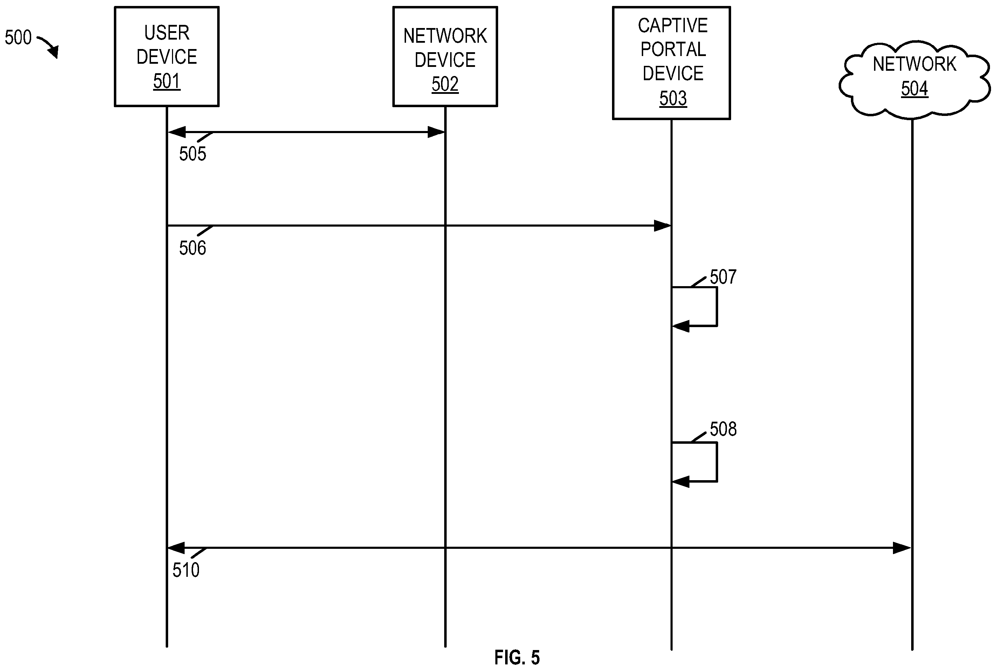

**FIG. 5** shows an example communication diagram **500** for enabling identity-based services using a random identifier. The example communication diagram **500** describes a scenario where a user device (e.g., a mobile device, a smart device, a computer/computing device, a client device, etc.) is attempting subsequent connection (after an initial connection has terminated) to a network, such as a public Wi-Fi network, using a random identifier of the user device, to associate, access, engage, and/or participate with one or more identity-based services via the network and/or one or more devices/components of the network.

A user device **501** (e.g., a mobile device, a smart device, a computer/computing device, a client device, etc.) may broadcast and/or otherwise send probe requests using a random identifier (e.g., a random MAC address, a random IMSI, a random IMEI, etc.) of the user device **501** to determine a network device within a communication range of the user device **501** that may facilitate a connection to a network **504** (e.g., Wi-Fi network, Internet, a private network, a public network, a content delivery network, cellular network, etc.). A network device **502** (e.g., an access point, a gateway, a Wi-Fi server, etc.) may be within the communication range of the user device **501** and may respond to the broadcast/probe request. The user device **501** may perform a handshake communication process (e.g., discovery, offer, request, acknowledgment, three-way handshake, etc.) with the network device **502** using a random identifier to authenticate the user device **501** and associate the user device **501** with the network device **502.** The network device **502** may provide the user device **501** a network address (e.g., IP address, etc.) based on an acknowledgment of the random identifier.

The user device **501** and the network device **502,** based on successful authentication/association between the user device **501** and the network device **502,** may communicate with each other using a communication protocol and/or network management protocol, such as Dynamic Host Configuration Protocol (DHCP), and/or the like. For example, the user device **501** may send a discover message (e.g., DHCP Discover, etc.), such as a request for a network address (e.g., an IP address lease request, etc.). The network device **502** may receive the discover message and send with an offer message (e.g., DHCP Offer, etc.), such as a response that includes the random identifier of the user device **501,** the requested network address, and a time window (e.g., lease duration, etc.) associated with the network address. The time window may indicate a duration during which the network address may be used to connect to the network **504.**

The offer message may include a public certificate (e.g., a digital certificate, an identity certificate, an SSL certificate, etc.). For example, the network device **502** may request the public certificate and/or a resource locator (e.g., URL, etc.) for the public certificate from a certificate issuing entity/authority. The network device **502** may send the public certificate and/or the resource locator for the public certificate to the user device **501** along with the offer message. The public certificate may include and/or be associated with one or more cryptographic keys (e.g., public keys, a public/private key pair, etc.) that may be used to encrypt/decrypt data/information associated with the public certificate.

The user device **501** may receive the public certificate and/or the resource locator for the public certificate to the user device **501** along with the offer message. The user device **501** may verify the integrity of the public certificate and/or the resource locator for the public certificate. For example, the user device **501** may determine whether the public certificate and/or the resource locator for the public certificate is associated with a list of trusted public certificates and/or the resource locators for public certificates.

At **505,** in response to the offer message and/or verifying the integrity of the public certificate and/or the resource locator for the public certificate, the user device **501** may send a request (e.g., DHCP Request, etc.) to the network device **502** accepting the network address offered by the network device **502.** The user device may use the network address to send encrypted information to the network device **502.** For example, the encrypted information may be sent via one or more of HTTPS, EAP-TLS, SSL, WPA, WPA2, WPA3, WEP, combinations thereof, and/or the like. The encrypted information may include a persistent identifier (e.g., a MAC address, an IMSI, an IMEI, etc.) of the user device **501.** The encrypted information may include, for example, packaged metadata based on and/or associated with the public certificate received from the network device **502.**

At **506,** the network device **502** may route/send the request to a captive portal device **503.** At **507,** the captive portal device **503** may decrypt the encrypted information, for example, using one or more cryptographic keys (e.g., public keys, a public/private key pair, etc.). The captive portal device **503** may determine the persistent identifier from the decrypted information.

At **508,** The captive portal device **503** may determine a status of the persistent identifier. The captive portal device **503** may determine that the persistent identifier is associated with a plurality of user devices authorized to access/connect to the network **504.** For example, the captive portal device **503** may determine that the persistent identifier is associated with a whitelist of user devices authorized to access/connect to the network **504.**

At **510,** the user device **501** may connect to and/or communicate with the network **504** and receive (e.g., associate with, access, engage, participate with, etc.) one or more identity-based services. For example, the captive portal device **503** may send an indication of the association between the persistent identifier and the whitelist to the network device **502.** The network device **502,** based on the indication of the association between the persistent identifier and the whitelist, may establish (and/or enable to be established) a connection and/or communication session between the user device **501** and the network **504.**

The connection and/or communication session between the user device **501** and the network **504** enables the user device **501** to receive (e.g., associate with, access, engage, participate with, etc.) the one or more identity-based services, such as a login-less network connection and/or reconnection, one or more subscription services, parental controls. content/advertisement tracking, private network access (e.g., identifier-based routing to private SSIDs, etc.), and/or the like.

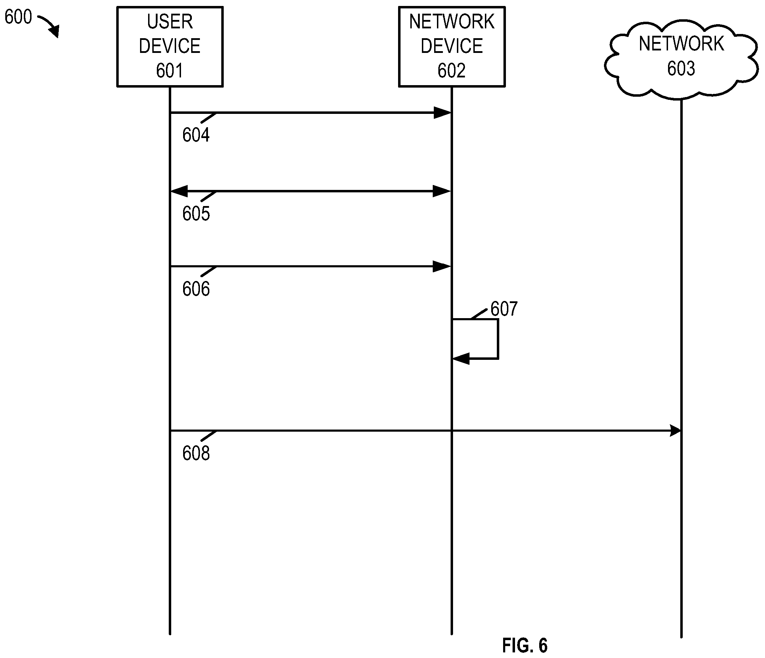

**FIG. 6** shows an example communication diagram **600.** The example communication diagram **600** describes a scenario where a user device (e.g., a mobile device, a smart device, a computer/computing device, a client device, etc.) sends a request to gain access to a network using a random identifier of the user device, to associate, access, engage, and/or participate with one or more identity-based services via the network and/or one or more devices/components of the network.

At **604,** a user device **601** (e.g., a mobile device, a smart device, a computer/computing device, a client device, etc.) may send a request to a network device **602** (e.g., an access point, a gateway, a Wi-Fi server, etc.) to connect to a network **603** (e.g., Wi-Fi network, Internet, a private network, a public network, a content delivery network, cellular network, etc.) using a random identifier (e.g., a random MAC address, a random IMSI, a random IMEI, etc.) of the user device **601.**

At **605,** A trust relationship between the user device **601** and the network device 602 may be determined/established. For example, based on successful authentication/association between the user device **601** and the network device **602,** the user device **601** and the network device **602** may communicate with each other using a communication protocol and/or network management protocol, such as Dynamic Host Configuration Protocol (DHCP), and/or the like. The trust relationship may be based on a successful handshake process (e.g., a DHCP 4-way handshake, etc.) between the user device **601** and the network device **602.**

The network device **602** may obtain/request a public certificate (e.g., a digital certificate, an identity certificate, an SSL certificate, etc.) from a certificate issuing entity/authority and send the public certificate (and/or the resource locator for the public certificate) to the user device **601.** The public certificate may include and/or be associated with one or more cryptographic keys (e.g., public keys, a public/private key pair, etc.) that may be used to encrypt/decrypt data/information associated with the public certificate.

The user device **601** may receive the public certificate and use one or more cryptographic keys to encrypt information, such as a persistent identifier (e.g., a MAC address, an IMSI, an IMEI, etc.) of the user device **601.**

At **606,** the user device **601** may send encrypted information to the network device **602.** The encrypted information may include a persistent identifier (e.g., a MAC address, an IMSI, an IMEI, etc.) of the user device **201.** The encrypted information may include, for example, packaged metadata based on and/or associated with the public certificate (e.g., one or more cryptographic keys, etc.) received from the network device **602.**

At **607,** the network device **602** may decrypt the encrypted information, for example, using one or more cryptographic keys (e.g., public keys, a public/private key pair, etc.). The network device **602** may determine the persistent identifier from the decrypted information. The encrypted information may include a time window and/or expiry of the random identifier. The network device **602** may determine the time window and/or the expiry of the random identifier from the decrypted information and associate the random identifier with the persistent identifier during the time window and/or before the expiry of the random identifier.

The network device **602** may store a mapping and/or indication of an association between the random identifier and the persistent identifier. The network device **602** may associate the random identifier with the persistent identifier. The association between the random identifier and the persistent identifier may enable the user device **601** to access and/or participate in one or more identity-based services associated with the user device **601.**

At **608,** the network device **602,** based on the mapping and/or indication of an association between the random identifier and the persistent identifier, may enable the user device **201** to connect (e.g., establish a communication session, etc.) to the network **603** using the random identifier. For example, the user device **601** may send/receive physical layer (OSI Layer 1) and/or data layer (OSI Layer 2) data/information to/from the network **603** and/or any other device/component associated with the network **603** using the random identifier.

The user device **601** may associate, access, engage, and/or participate with one or more identity-based services via the network **603.** The persistent identifier and/or user device **601** may be associated with one or more identity-based services, such as a login-less network connection and/or reconnection (e.g., auto-login, etc.), one or more subscription services, parental controls, content/advertisement tracking, private network access (e.g., identifier-based routing to private SSIDs, etc.), and/or the like.

For example, based on the mapping/association between the random identifier and the persistent identifier, the user device **601** may connect to a local network (of and/or associated with the network **603)** associated with the persistent identifier and/or the user device **601.** The user device **601** may connect to a Wi-Fi server, a content delivery device, an application server/device, a service provider device, a router, a local area network (LAN) management/control device, and/or the like, based on the mapping/association between the random identifier and the persistent identifier. The user device **601** may access to one or more content items, resources, and/or the like associated with the persistent identifier. The user device **601,** based on the mapping/association between the random identifier and the persistent identifier, may be restricted (e.g., via one or more parental control, etc.) from accessing one or more resources/files, websites, and/or the like via the network **603.** The user device **601** may associate, access, engage, and/or participate with any type of identity-based service based on the persistent identifier.

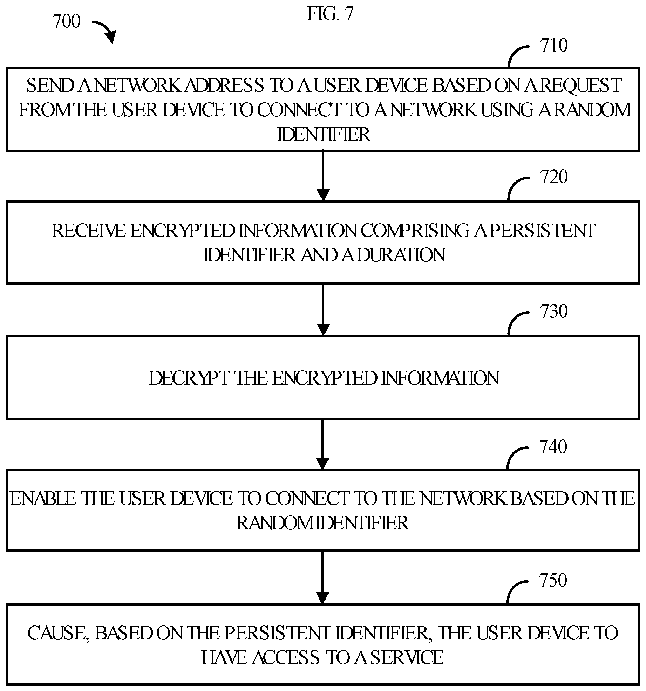

**FIG. 7** shows a flowchart of an example method **700** for enabling identity-based services using a random identifier. At **710,** a network address (e.g., an IP address, etc.) may be sent to a user device (e.g., a mobile device, a smart device, a computer/computing device, a client device, etc.). A network device (e.g., an access point, a gateway, a Wi-Fi server, etc.) may send the network address to the user device based on a request from the user device to connect to a network (e.g., Wi-Fi network, Internet, a private network, a public network, a content delivery network, cellular network, etc.) using a random identifier (e.g., a random MAC address, a random IMSI, a random IMEI, etc.) of the user device. The network address may be sent to the user device based on successful authentication, association, and hand-shake communication process/protocol (e.g., a DHCP handshake, etc.) between the user device and the network device.

At **720,** encrypted information may be received. The network device may receive the encrypted information from the user device based on the network address. For example, the user device may use the network address to send/communicate the encrypted information to the network device. The network device, based on the request from the user device to connect to the network, may request a public certificate and/or a resource locator (e.g., URL, etc.) for the public certificate from a certificate issuing entity/authority. The network device may send the public certificate and/or the resource locator for the public certificate to the user device. The public certificate may include and/or be associated with one or more cryptographic keys (e.g., public keys, a public/private key pair, etc.) that may be used to encrypt/decrypt data/information associated with the public certificate.

The user device may use the one or more cryptographic keys and the public certificate to generate encrypted metadata that includes a persistent identifier (e.g., a MAC address, a IMSI, a IMEI, etc.) of the user device. The encrypted information and/or metadata may include an indication of a time window (duration). The time window may be any time during which the random identifier is to be associated with the persistent identifier. The user device may use the network address to send encrypted information to the network device. For example, the encrypted information may be sent via one or more of: HTTPS, EAP-TLS, SSL, WPA, WPA2, WPA3, WEP, combinations thereof and/or the like.

At 730, the encrypted information may be decrypted. The network device may decrypt the encrypted information. The network device may decrypt the encrypted information, for example, using the one or more cryptographic keys (e.g., public keys, a public/private key pair, etc.). The network device may determine the persistent identifier and the time window from the decrypted information. The network device may store, for example in a database, an association/mapping between the random identifier and the persistent identifier for the duration of the time window.

At **740,** the user device may connect to the network. The network device may enable the user device to connect to the network. For example, the user device may send/receive physical layer and/or data layer data/information to/from the network using the random identifier.

At **750,** the user device may access a service. For example, the user device may, optionally, connect to and/or communicate with a service. The service may be, for example, an identity based-service. The identity-based service may be enabled based on the persistent identifier. The network device may enable identity-based services associated with the user device. For example, the network device may cause the user device to access the identity-based service by routing the persistent identifier to a service and/or facilitating a connection between the user device and the service. The network device may enable identity-based services associated with the user device during the time window indicated by the encrypted information received from the user device.

For example, during the time window, the network device may enable the user device to connect to a local network associated with the persistent identifier and/or the user device via the network. The user device may be enabled to access one or more content items, resources, and/or the like associated with the persistent identifier. The user device, based on the persistent identifier, may be restricted (e.g., via one or more parental control, etc.) from accessing one or more resources/files, websites, and/or the like via the network. The user device may associate, access, engage, and/or participate with any type of service (e.g., an identity-based service, etc.) based on the persistent identifier.

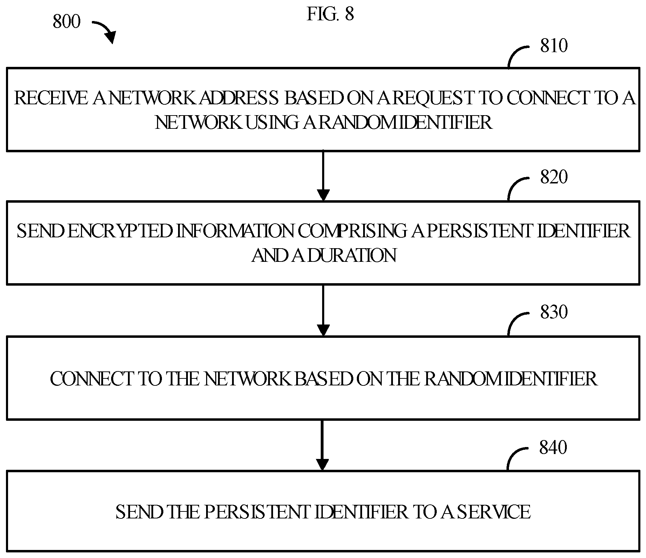

**FIG. 8** shows a flowchart of an example method **800** for enabling identity-based services using a random identifier. At **810,** a network address (e.g., an IP address, etc.) may be received. The network address may be received by a user device (e.g., a mobile device, a smart device, a computer/computing device, a client device, etc.). The network address may be received by the user device based on a request to connect to a network (e.g., Wi-Fi network, Internet, a private network, a public network, a content delivery network, cellular network, etc.) using a random identifier (e.g., a random MAC address, a random IMSI, a random IMEI, etc.) of the user device. A network device (e.g., an access point, a gateway, a Wi-Fi server, etc.) may send the network address to the user device based on the request to connect to the network. The network address may be sent to the user device based on a successful authentication, association, and hand-shake communication process/protocol (e.g., a DHCP handshake, etc.) between the user device and the network device.

At **820,** encrypted information may be sent. Encrypted information may be sent, by the user device, to the network device based on the network address, wherein the encrypted information comprises a persistent identifier of the user device and an indication of a duration, wherein the network device is configured to decrypt the encrypted information. For example, the user device may use the network address to send/communicate the encrypted information to the network device. The network device, based on the request from the user device to connect to the network, may request a public certificate and/or a resource locator (e.g., URL, etc.) for the public certificate from a certificate issuing entity/authority. The network device may send the public certificate and/or the resource locator for the public certificate to the user device. The public certificate may include and/or be associated with one or more cryptographic keys (e.g., public keys, a public/private key pair, etc.) that may be used to encrypt/decrypt data/information associated with the public certificate.

The user device may use the one or more cryptographic keys and the public certificate to generate encrypted metadata that includes a persistent identifier (e.g., a MAC address, a IMSI, a IMEI, etc.) of the user device. The encrypted information and/or metadata may include an indication of a time window (duration). The time window may be any time during which the random identifier is to be associated with the persistent identifier. The user device may use the network address to send encrypted information to the network device. For example, the encrypted information may be sent via one or more of: HTTPS, EAP-TLS, SSL, WPA, WPA2, WPA3, WEP, combinations thereof and/or the like. The network device may decrypt the encrypted information, for example, using the one or more cryptographic keys (e.g., public keys, a public/private key pair, etc.).

The encrypted information may be decrypted. The network device may decrypt the encrypted information. The network device may decrypt the encrypted information, for example, using the one or more cryptographic keys (e.g., public keys, a public/private key pair, etc.). The network device may determine the persistent identifier and the time window from the decrypted information. The network device may store, for example in a database, an association/mapping between the random identifier and the persistent identifier for the duration of the time window.

At 830, the user device may connect to the network. The user device may connect to the network using the persistent identifier. The network device may enable the user device to connect to the network. For example, the user device may send/receive physical layer and/or data layer data/information to/from the network using the random identifier.

At **840,** the user device may send the persistent identifier to a service. For example, t user device may, optionally, connect to and/or communicate with a service using the persistent identifier. The service may be, for example, an identity based-service. The user device may receive, for the duration and based on the persistent identifier, any number of identity-based services associated with the user device. The network device may cause and/or enable identity-based services associated with the user device by routing the persistent identifier to an identity-based service and/or facilitating a connection between the user device and an identity-based service (or any other service). The network device may enable identity-based services associated with the user device during the time window indicated by the encrypted information received from the user device.

For example, during the time window, the network device may enable the user device to connect to a local network associated with the persistent identifier and/or the user device via the network. The user device may be enabled to access one or more content items, resources, and/or the like associated with the persistent identifier. The user device, based on the persistent identifier, may be restricted (e.g., via one or more parental control, etc.) from accessing one or more resources/files, websites, and/or the like via the network. The user device may associate, access, engage, and/or participate with any type of identity-based service based on the persistent identifier.

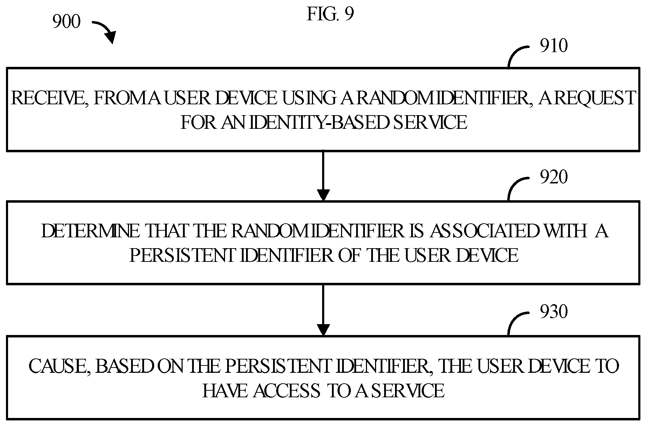

**FIG. 9** shows a flowchart of an example method **900** for enabling identity-based services using a random identifier. An identity-based service may include, for example, a login-less network connection and/or reconnection, one or more subscription services, parental controls, content/advertisement tracking, private network access (e.g., identifier-based routing to private SSIDs, etc.), and/or the like. At **910,** a request for at least one identity-based service may be received. The request for the identity-based service may be received/associated with a request from a user device (e.g., a mobile device, a smart device, a computer/computing device, a client device, etc.) to connect to a network (e.g., Wi-Fi network, Internet, a private network, a public network, a content delivery network, cellular network, etc.) with a random identifier (e.g., a random MAC address, a random IMSI, a random IMEI, etc.) of the user device. A network device (e.g., an access point, a gateway, a Wi-Fi server, etc.) may receive the request to connect to the network, for example, based on successful authentication, association, and hand-shake communication process/protocol (e.g., a DHCP handshake, etc.) between the user device and the network device. The network device may send, based on the request to connect to the network, a network address (e.g., an IP address, etc.) to the user device. The user device may use the network address to send the random identifier to the network device.

At **920,** the network device may determine that the random identifier is associated with a persistent identifier (e.g., a MAC address, a IMSI, a IMEI, etc.) of the user device. The network device may determine that an indication of the random identifier is stored, for example within a database, with an indication of the persistent identifier.

At **930,** the user device may access an identity-based service. For example, the user device may, optionally, connect to and/or communicate with an identity-based service. The identity-based services may be enabled based on the persistent identifier. The network device may enable identity-based services associated with the user device. For example, the network device may cause the user device to access the identity-based service by routing the persistent identifier to a service and/or facilitating a connection between the user device and the service. The network device may enable, based on the persistent identifier, identity-based services associated with the user device during the time window indicated by the encrypted information received from the user device. Enabling identity-based services associated with the user device during the time window indicated by the encrypted information received from the user device may allow the user device to connect and/or reconnect to the identity-based service whenever an association between the random identifier (or any other random identifier) and the persistent identifier is determined, for example, by the network device.

The network device may enable the user device to connect to a local network associated with the persistent identifier and/or the user device via the network. The user device may be enabled to access one or more content items, resources, and/or the like associated with the persistent identifier. The user device, based on the persistent identifier, may be restricted (e.g., via one or more parental control, etc.) from accessing one or more resources/files, websites, and/or the like via the network. The user device may associate, access, engage, and/or participate with any type of service (e.g., an identity-based service, etc.) based on the persistent identifier.

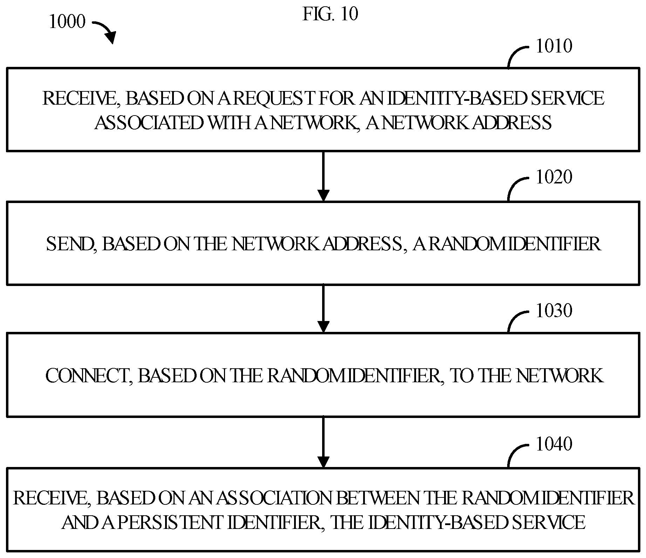

**FIG. 10** shows a flowchart of an example method **900** for enabling identity-based services using a random identifier. An identity-based service may include, for example, a login-less network connection and/or reconnection, one or more subscription services, parental controls, content/advertisement tracking, private network access (e.g., identifier-based routing to private SSIDs, etc.), and/or the like. At **1010,** a request for at least one identity-based service may be received. The request for the identity-based service may be received/associated with a request from a user device (e.g., a mobile device, a smart device, a computer/computing device, a client device, etc.) to connect to a network (e.g., Wi-Fi network, Internet, a private network, a public network, a content delivery network, cellular network, etc.) with a random identifier (e.g., a random MAC address, a random IMSI, a random IMEI, etc.) of the user device. A network device (e.g., an access point, a gateway, a Wi-Fi server, etc.) may receive the request to connect to the network, for example, based on a successful authentication, association, and hand-shake communication process/protocol (e.g., a DHCP handshake, etc.) between the user device and the network device.

For example, a network address (e.g., an IP address, etc.) may be received. The network address may be received by a user device (e.g., a mobile device, a smart device, a computer/computing device, a client device, etc.). The network address may be received by the user device based on a request to connect to a network (e.g., Wi-Fi network, Internet, a private network, a public network, a content delivery network, cellular network, etc.) using a random identifier (e.g., a random MAC address, a random IMSI, a random IMEI, etc.) of the user device. A network device (e.g., an access point, a gateway, a Wi-Fi server, etc.) may send the network address to the user device based on the request to connect to the network. The network address may be sent to the user device based on a successful authentication, association, and hand-shake communication process/protocol (e.g., a DHCP handshake, etc.) between the user device and the network device.

At **1020,** the random identifier may be sent to the network device. The user device may use the network address to send the random identifier to the network device. The network device may determine that the random identifier is associated with a persistent identifier (e.g., a MAC address, a IMSI, a IMEI, etc.) of the user device. For example, the network device may determine that an indication of the random identifier is stored, for example within a database, with an indication of the persistent identifier.

At **1030,** the user device may connect to the network. The user device may connect to the network using the random identifier. The network device may enable the user device to connect to the network. For example, the user device may send/receive physical layer and/or data layer data/information to/from the network using the random identifier.

At **1040,** the at least one identity-based service may be received. The user device may receive, based on the association between the random identifier and the persistent identifier, the at least one identity-based service associated with the user device. For example, based on the association between the random identifier and the persistent identifier, the network device may enable the user device to connect to a local network associated with the persistent identifier and/or the user device via the network. The user device may be enabled to access one or more content items, resources, and/or the like associated with the persistent identifier. The user device, based on the persistent identifier, may be restricted (e.g., via one or more parental control, etc.) from accessing one or more resources/files, websites, and/or the like via the network. The user device may associate, access, engage, and/or participate with any type of identity-based service based on the persistent identifier.

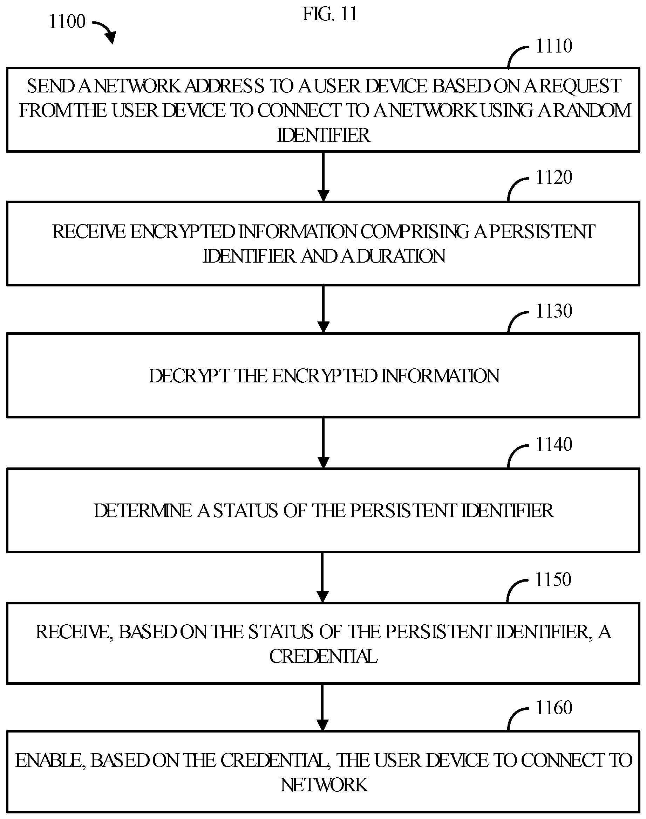

**FIG. 11** shows a flowchart of an example method **1100** for enabling identity-based services using a random identifier. At **1110,** a network address (e.g., an IP address, etc.) may be sent to a user device (e.g., a mobile device, a smart device, a computer/computing device, a client device, etc.). A network device (e.g., an access point, a gateway, a Wi-Fi server, etc.) may send the network address to the user device based on a request from the user device to connect to a network (e.g., Wi-Fi network, Internet, a private network, a public network, a content delivery network, cellular network, etc.) using a random identifier (e.g., a random MAC address, a random IMSI, a random IMEI, etc.) of the user device. The network address may be sent to the user device based on successful authentication, association, and hand-shake communication process/protocol (e.g., a DHCP handshake, etc.) between the user device and the network device.

At **1120,** encrypted information may be received. The network device may receive the encrypted information from the user device based on the network address. For example, the user device may use the network address to send/communicate the encrypted information to the network device. The network device, based on the request from the user device to connect to the network, may request a public certificate and/or a resource locator (e.g., URL, etc.) for the public certificate from a certificate issuing entity/authority. The network device may send the public certificate and/or the resource locator for the public certificate to the user device. The public certificate may include and/or be associated with one or more cryptographic keys (e.g., public keys, a public/private key pair, etc.) that may be used to encrypt/decrypt data/information associated with the public certificate.

The user device may use the one or more cryptographic keys and the public certificate to generate encrypted metadata that includes a persistent identifier (e.g., a MAC address, an IMSI, an IMEI, etc.) of the user device. The user device may use the network address to send encrypted information to the network device. For example, the encrypted information may be sent via one or more of HTTPS, EAP-TLS, SSL, WPA, WPA2, WPA3, WEP, combinations thereof, and/or the like.

At **1130,** the encrypted information may be decrypted. To decrypt the encrypted information, the network device may route/send the encrypted information to a captive portal device. The captive portal device may decrypt the encrypted information, for example, using the one or more cryptographic keys (e.g., public keys, a public/private key pair, etc.). The captive portal device may determine the persistent identifier from the decrypted information.

At **1140,** a status of the persistent identifier may be determined. The captive portal device may determine the status of the persistent identifier. The captive portal device may determine that the persistent identifier is not associated with a plurality of user devices authorized to access/connect to the network. For example, the captive portal device may determine that the persistent identifier is not associated with a whitelist of user devices authorized to access/connect to the network.

At **1150,** a credential may be received. A credential (e.g., an authentication credential, etc.) may include at least one of: login information, password information, an access code, or a response to a challenge query. The captive portal device, based on determining that the persistent identifier is not associated with the plurality of user devices authorized to access/connect to the network, may request at least one credentials from the user device. For example, the captive portal device may generate a login element and/or the like, that includes a graphical user interface that is configured to accept the credential from the user device and/or a user of the user device. The captive portal device may send a request for the credential, for example via the login element, to the network device and the network device may route the request to the user device. The user device may provide, for example via the login element, the credential. The network device may send the credential to the captive portal device.

At **1160,** the user device may be enabled to connect to the network. The captive portal device, based on receiving the credential, may associate the persistent identifier with the plurality of user devices authorized to access the network. For example, the captive portal device may associate the persistent identifier with the whitelist of user devices authorized to access/connect to the network. The captive portal device may send an indication of the association between the persistent identifier and the whitelist to the network device. The network device, based on the indication of the association between the persistent identifier and the whitelist, may establish (and/or enable to be established) a connection and/or communication session between the user device and the network.

The connection and/or communication session between the user device and the network enables the user device to receive (e.g., associate with, access, engage, participate with, etc.) one or more identity-based services, such as a login-less network connection and/or reconnection, one or more subscription services, parental controls, content/advertisement tracking, private network access (e.g., identifier-based routing to private SSIDs, etc.), and/or the like.

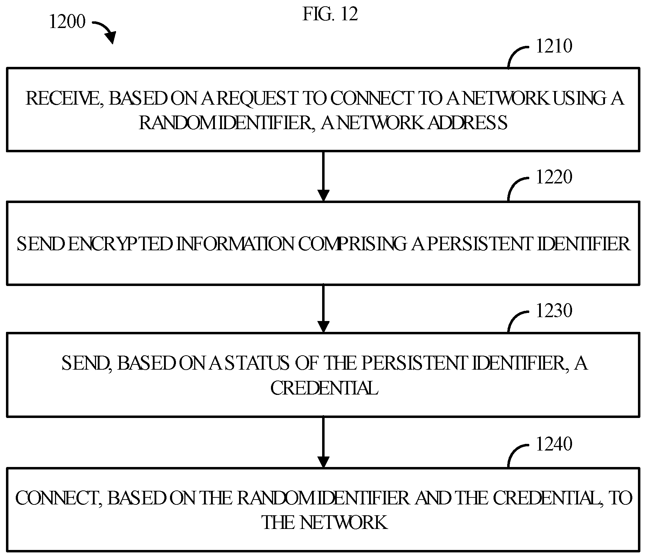

**FIG. 12** shows a flowchart of an example method **1200** for enabling identity-based services using a random identifier. At **1210,** a network address (e.g., an IP address, etc.) may be received by a user device (e.g., a mobile device, a smart device, a computer/computing device, a client device, etc.). A network device (e.g., an access point, a gateway, a Wi-Fi server, etc.) may send the network address to the user device based on a request from the user device to connect to a network (e.g., Wi-Fi network, Internet, a private network, a public network, a content delivery network, cellular network, etc.) using a random identifier (e.g., a random MAC address, a random IMSI, a random IMEI, etc.) of the user device. The network address may be sent to the user device based on successful authentication, association, and hand-shake communication process/protocol (e.g., a DHCP handshake, etc.) between the user device and the network device.

At **1220,** encrypted information may be sent. The user device may use the network address to send the encrypted information to the network device. The network device, based on the request from the user device to connect to the network, may request a public certificate and/or a resource locator (e.g., URL, etc.) for the public certificate from a certificate issuing entity/authority. The network device may send the public certificate and/or the resource locator for the public certificate to the user device. The public certificate may include and/or be associated with one or more cryptographic keys (e.g., public keys, a public/private key pair, etc.) that may be used to encrypt/decrypt data/information associated with the public certificate.

The user device may use the one or more cryptographic keys and the public certificate to generate encrypted metadata that includes a persistent identifier (e.g., a MAC address, an IMSI, an IMEI, etc.) of the user device. The user device may use the network address to send encrypted information to the network device. For example, the encrypted information may be sent via one or more of HTTPS, EAP-TLS, SSL, WPA, WPA2, WPA3, WEP, combinations thereof, and/or the like.

The encrypted information may be decrypted. To decrypt the encrypted information, the network device may route/send the encrypted information to a captive portal device. The captive portal device may decrypt the encrypted information, for example, using the one or more cryptographic keys (e.g., public keys, a public/private key pair, etc.). The captive portal device may determine the persistent identifier from the decrypted information.

At **1230,** a credential may be sent. A credential (e.g., an authentication credential, etc.) may include at least one of: login information, password information, an access code, or a response to a challenge query. The user device may send the credential based on the status of the persistent identifier. The captive portal device may determine the status of the persistent identifier. For example, the captive portal device may determine that the persistent identifier is not associated with a plurality of user devices authorized to access/connect to the network. For example, the captive portal device may determine that the persistent identifier is not associated with a whitelist of user devices authorized to access/connect to the network.

The captive portal device, based on determining that the persistent identifier is not associated with the plurality of user devices authorized to access/connect to the network, may request at least one credentials from the user device. For example, the captive portal device may generate a login element and/or the like, that includes a graphical user interface that is configured to accept the credential from the user device and/or a user of the user device. The captive portal device may send a request for the credential, for example via the login element, to the network device and the network device may route the request to the user device. The user device may provide, for example via the login element, the credential. The network device may send the credential to the captive portal device.

At **1240,** the user device may connect to the network. The user device may connect to the network based on the random identifier and the credential. The captive portal device, based on receiving the credential, may associate the persistent identifier with the plurality of user devices authorized to access the network. For example, the captive portal device may associate the persistent identifier with the whitelist of user devices authorized to access/connect to the network. The captive portal device may send an indication of the association between the persistent identifier and the whitelist to the network device. The network device, based on the indication of the association between the persistent identifier and the whitelist, may establish (and/or enable to be established) a connection and/or communication session between the user device and the network.

The connection and/or communication session between the user device and the network enables the user device to receive (e.g., associate with, access, engage, participate with, etc.) one or more identity-based services, such as a login-less network connection and/or reconnection, one or more subscription services, parental controls, content/advertisement tracking, private network access (e.g., identifier-based routing to private SSIDs, etc.), and/or the like.

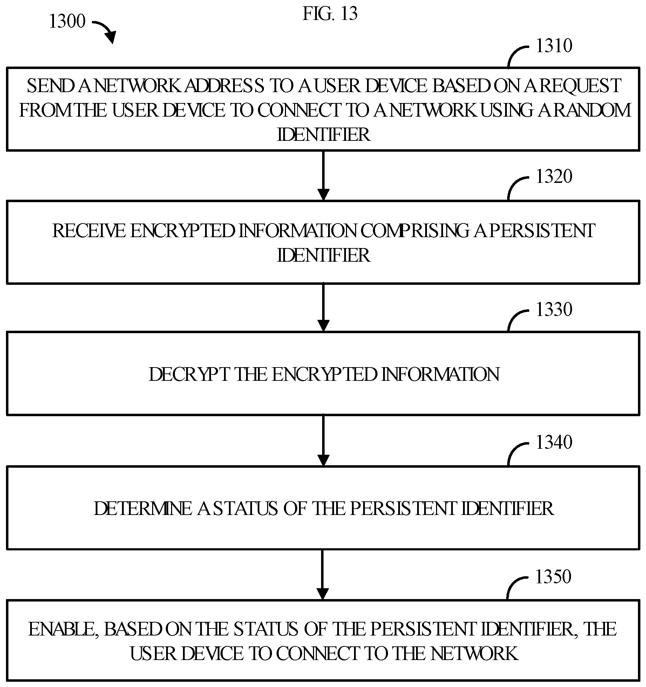

**FIG. 13** shows a flowchart of an example method **1300** for enabling identity-based services using a random identifier. At **1310,** a network address (e.g., an IP address, etc.) may be sent to a user device (e.g., a mobile device, a smart device, a computer/computing device, a client device, etc.). A network device (e.g., an access point, a gateway, a Wi-Fi server, etc.) may send the network address to the user device based on a request from the user device to connect to a network (e.g., Wi-Fi network, Internet, a private network, a public network, a content delivery network, cellular network, etc.) using a random identifier (e.g., a random MAC address, a random IMSI, a random IMEI, etc.) of the user device. The network address may be sent to the user device based on successful authentication, association, and hand-shake communication process/protocol (e.g., a DHCP handshake, etc.) between the user device and the network device.

At **1320,** encrypted information may be received. The network device may receive the encrypted information from the user device based on the network address. For example, the user device may use the network address to send/communicate the encrypted information to the network device. The network device, based on the request from the user device to connect to the network, may request a public certificate and/or a resource locator (e.g., URL, etc.) for the public certificate from a certificate issuing entity/authority. The network device may send the public certificate and/or the resource locator for the public certificate to the user device. The public certificate may include and/or be associated with one or more cryptographic keys (e.g., public keys, a public/private key pair, etc.) that may be used to encrypt/decrypt data/information associated with the public certificate.

The user device may use the one or more cryptographic keys and the public certificate to generate encrypted metadata that includes a persistent identifier (e.g., a MAC address, an IMSI, an IMEI, etc.) of the user device. The user device may use the network address to send encrypted information to the network device. For example, the encrypted information may be sent via one or more of: HTTPS, EAP-TLS, SSL, WPA, WPA2, WPA3, WEP, combinations thereof and/or the like.

At **1230,** the encrypted information may be decrypted. To decrypt the encrypted information, the network device may route/send the encrypted information to a captive portal device. The captive portal device may decrypt the encrypted information, for example, using the one or more cryptographic keys (e.g., public keys, a public/private key pair, etc.). The captive portal device may determine the persistent identifier from the decrypted information.

At **1340,** a status of the persistent identifier may be determined. The captive portal device may determine the status of the persistent identifier. The captive portal device may determine that the persistent identifier is associated with a plurality of user devices authorized to access/connect to the network. For example, the captive portal device may determine that the persistent identifier is associated with a whitelist of user devices authorized to access/connect to the network.

At **1350,** the user device may be enabled to connect to the network. The captive portal device, based on the status of the persistent identifier, may send an indication of the association between the persistent identifier and the whitelist to the network device. The network device, based on the indication of the association between the persistent identifier and the whitelist, may establish (and/or enable to be established) a connection and/or communication session between the user device and the network.

The connection and/or communication session between the user device and the network enables the user device to receive (e.g., associate with, access, engage, participate with, etc.) one or more identity-based services, such as a login-less network connection and/or reconnection, one or more subscription services, parental controls, content/advertisement tracking, private network access (e.g., identifier-based routing to private SSIDs, etc.), and/or the like.

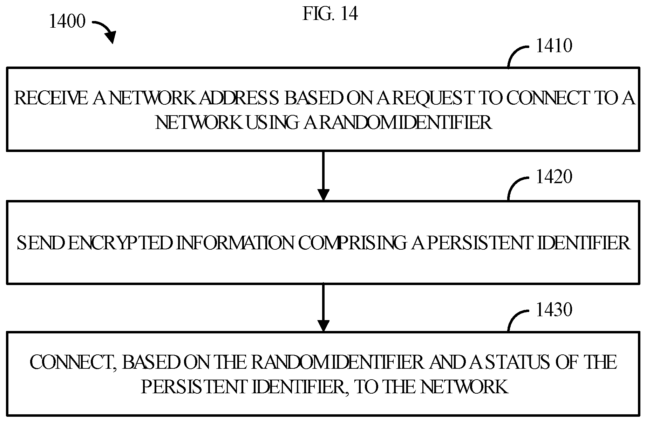

**FIG. 14** shows a flowchart of an example method **1400** for enabling identity-based services using a random identifier. At **1410,** a network address (e.g., an IP address, etc.) may be received by a user device (e.g., a mobile device, a smart device, a computer/computing device, a client device, etc.). A network device (e.g., an access point, a gateway, a Wi-Fi server, etc.) may send the network address to the user device based on a request from the user device to connect to a network (e.g., Wi-Fi network, Internet, a private network, a public network, a content delivery network, cellular network, etc.) using a random identifier (e.g., a random MAC address, a random IMSI, a random IMEI, etc.) of the user device. The network address may be sent to the user device based on a successful authentication, association, and hand-shake communication process/protocol (e.g., a DHCP handshake, etc.) between the user device and the network device.

At **1420,** encrypted information may be sent. The user device may use the network address to send the encrypted information to the network device. The network device, based on the request from the user device to connect to the network, may request a public certificate and/or a resource locator (e.g., URL, etc.) for the public certificate from a certificate issuing entity/authority. The network device may send the public certificate and/or the resource locator for the public certificate to the user device. The public certificate may include and/or be associated with one or more cryptographic keys (e.g., public keys, a public/private key pair, etc.) that may be used to encrypt/decrypt data/information associated with the public certificate.

The user device may use the one or more cryptographic keys and the public certificate to generate encrypted metadata that includes a persistent identifier (e.g., a MAC address, an IMSI, an IMEI, etc.) of the user device. The user device may use the network address to send encrypted information to the network device. For example, the encrypted information may be sent via one or more of HTTPS, EAP-TLS, SSL, WPA, WPA2, WPA3, WEP, combinations thereof, and/or the like.

The encrypted information may be decrypted. To decrypt the encrypted information, the network device may route/send the encrypted information to a captive portal device. The captive portal device may decrypt the encrypted information, for example, using the one or more cryptographic keys (e.g., public keys, a public/private key pair, etc.). The captive portal device may determine the persistent identifier from the decrypted information. The captive portal device may determine that the persistent identifier is associated with a plurality of user devices authorized to access/connect to the network. For example, the captive portal device may determine that the persistent identifier is associated with a whitelist of user devices authorized to access/connect to the network.

At **1430,** the user device may connect to the network. The user device may connect to the network based on the random identifier and the credential. The captive portal device, based on the status of the persistent identifier, may send an indication of the association between the persistent identifier and the whitelist to the network device. The network device, based on the indication of the association between the persistent identifier and the whitelist, may establish (and/or enable to be established) a connection and/or communication session between the user device and the network.

The connection and/or communication session between the user device and the network enables the user device to receive (e.g., associate with, access, engage, participate with, etc.) one or more identity-based services, such as a login-less network connection and/or reconnection, one or more subscription services, parental controls, content/advertisement tracking, private network access (e.g., identifier-based routing to private SSIDs, etc.), and/or the like.

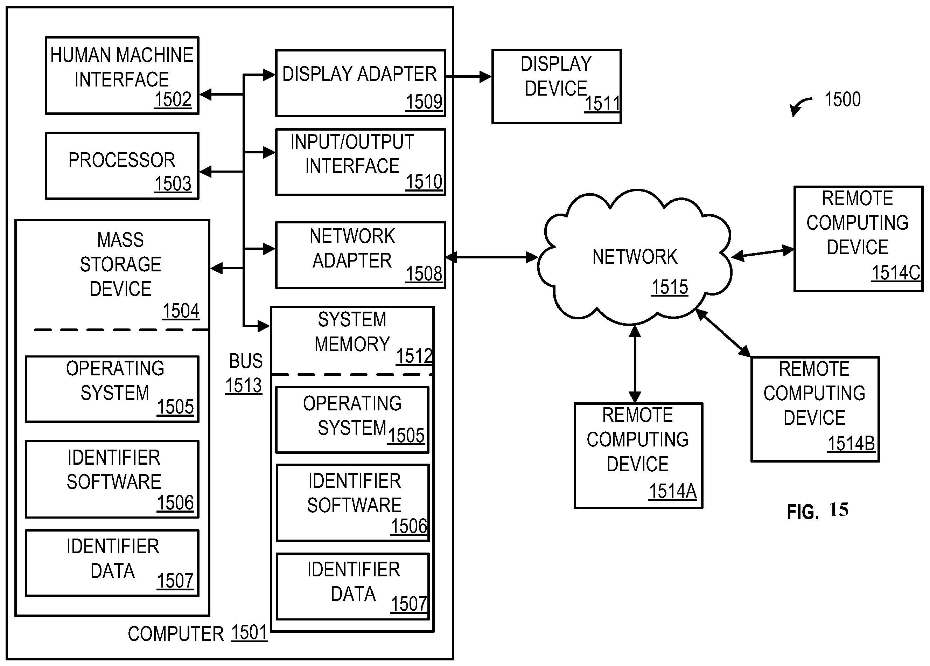

**FIG. 15** shows a system **1500** for enabling identity-based services using a random identifier. Any device and/or component described herein may be a computer **1501** as shown in **FIG. 15****.**

The computer **1501** may comprise one or more processors **1503,** a system memory **1512,** and a bus **1513** that couples various components of the computer **1501** including the one or more processors **1503** to the system memory **1512.** In the case of multiple processors **1503,** the computer **1501** may utilize parallel computing.

The bus **1513** may comprise one or more of several possible types of bus structures, such as a memory bus, memory controller, a peripheral bus, an accelerated graphics port, and a processor or local bus using any of a variety of bus architectures.

The computer **1501** may operate on and/or comprise a variety of computer-readable media (e.g., non-transitory). Computer-readable media may be any available media that is accessible by the computer **1501** and comprises, non-transitory, volatile and/or non-volatile media, removable and non-removable media. The system memory **1512** has computer-readable media in the form of volatile memory, such as random access memory (RAM), and/or non-volatile memory, such as read-only memory (ROM). The system memory **1512** may store data such as identifier data **1507** and/or program modules such as operating system **1505** and identifier management software **1506** that are accessible to and/or are operated on by the one or more processors **1503.**

The computer **1501** may also comprise other removable/non-removable, volatile/non-volatile computer storage media. The mass storage device **1504** may provide non-volatile storage of computer code, computer-readable instructions, data structures, program modules, and other data for the computer **1501.** The mass storage device **1504** may be a hard disk, a removable magnetic disk, a removable optical disk, magnetic cassettes or other magnetic storage devices, flash memory cards, CD-ROM, digital versatile disks (DVD) or other optical storage, random access memories (RAM), read-only memories (ROM), electrically erasable programmable read-only memory (EEPROM), and the like.

Any number of program modules may be stored on the mass storage device **1504.** An operating system **1505** and identifier management software **1506** may be stored on the mass storage device **1504.** One or more of the operating system **1505** and the identifier management software **1506** (or some combination thereof) may comprise program modules and the identifier management software **1506.** Identifier data **1507** may also be stored on the mass storage device **1504.** Identifier data **1507** may be stored in any of one or more databases known in the art. The databases may be centralized or distributed across multiple locations within the network **1515.**

A user may enter commands and information into the computer **1501** via an input device (not shown). Such input devices comprise, but are not limited to, a keyboard, pointing device (*e.g.*, a computer mouse, remote control), a microphone, a joystick, a scanner, tactile input devices such as gloves, and other body coverings, motion sensor, and the like These and other input devices may be connected to the one or more processors **1503** via a human-machine interface **1502** that is coupled to the bus **1513,** but may be connected by other interface and bus structures, such as a parallel port, game port, an IEEE 1394 Port (also known as a Firewire port), a serial port, network adapter **1508,** and/or a universal serial bus (USB).

A display device **1511** may also be connected to the bus **1513** via an interface, such as a display adapter **1509.** It is contemplated that the computer **1501** may have more than one display adapter **1509** and the computer **1501** may have more than one display device **1511.** A display device **1511** may be a monitor, an LCD (Liquid Crystal Display), light-emitting diode (LED) display, television, smart lens, smart glass, and/ or a projector. In addition to the display device **1511,** other output peripheral devices may comprise components such as speakers (not shown) and a printer (not shown) which may be connected to the computer **1501** via Input/Output Interface **1510.** Any step and/or result of the methods may be output (or caused to be output) in any form to an output device. Such output may be any form of visual representation, including, but not limited to, textual, graphical, animation, audio, tactile, and the like. The display **1511** and computer **1501** may be part of one device, or separate devices.

The computer **1501** may operate in a networked environment using logical connections to one or more remote computing devices **1514a,b,c.** A remote computing device **1514a,b,c** may be a personal computer, computing station (e.g., workstation), portable computer (e.g., laptop, mobile phone, tablet device), smart device (e.g., smartphone, smartwatch, activity tracker, smart apparel, smart accessory), security and/or monitoring device, a Wi-Fi server, a router, a network computer, a peer device, edge device or other common network nodes, and so on. Logical connections between the computer **1501** and a remote computing device **1514a,b,c** may be made via a network **1515,** such as a local area network (LAN) and/or a general wide area network (WAN). Such network connections may be through a network adapter **1508.** A network adapter **1508** may be implemented in both wired and wireless environments. Such networking environments are conventional and commonplace in dwellings, offices, enterprise-wide computer networks, intranets, and the Internet.

Application programs and other executable program components such as the operating system **1505** are shown herein as discrete blocks, although it is recognized that such programs and components may reside at various times in different storage components of the computer **1501,** and are executed by the one or more processors **1503** of the computer **1501.** An implementation of the identifier management software **1506** may be stored on or sent across some form of computer readable media. Any of the disclosed methods may be performed by processor-executable instructions embodied on computer readable media.

While specific configurations have been described, it is not intended that the scope be limited to the particular configurations set forth, as the configurations herein are intended in all respects to be possible configurations rather than restrictive.

Unless otherwise expressly stated, it is in no way intended that any method set forth herein be construed as requiring that its steps be performed in a specific order. Accordingly, where a method claim does not actually recite an order to be followed by its steps or it is not otherwise specifically stated in the claims or descriptions that the steps are to be limited to a specific order, it is no way intended that an order be inferred, in any respect. This holds for any possible non-express basis for interpretation, including: matters of logic with respect to arrangement of steps or operational flow; plain meaning derived from grammatical organization or punctuation; the number or type of configurations described in the specification.

It will be apparent to those skilled in the art that various modifications and variations may be made without departing from the scope. Other configurations will be apparent to those skilled in the art from consideration of the specification and practice described herein. It is intended that the specification and described configurations be considered as exemplary only, with a scope being indicated by the following claims.

## Claims

1. A method comprising:
sending (710), to a user device, based on a request from the user device to connect to a network using a random identifier, a network address;
receiving (720), based on the network address, encrypted information, wherein the encrypted information comprises a persistent identifier associated with the user device;
determining (730), based on the encrypted information, the persistent identifier associated with the user device; and
causing (740), based on the random identifier and the persistent identifier, the user device to connect to the network.

2. The method of claim 1, further comprising causing, based on the persistent identifier being sent to a service associated with the user device, the user device to access to the service.

3. The method of any proceeding claim, wherein the service comprises at least one of: a subscription service, a parental control service, an information tracking service, a private network service, and an auto-login service.

4. The method of any proceeding claim, wherein the user device comprises at least one of: a mobile device, a smart device, or a content player.

5. The method of any proceeding claim, wherein the random identifier comprises at least on of: a random Media Access Control address, a random International Mobile Subscriber Identity, and a random International Mobile Station Equipment Identity.

6. The method of any proceeding claim, wherein the persistent identifier comprises at least on of: a Media Access Control address, an International Mobile Subscriber Identity, and an International Mobile Station Equipment Identity.

7. The method of any proceeding claim, wherein receiving the encrypted information comprises receiving the encrypted information via at least one of: Hypertext Transfer Protocol Secure, Extensible Authentication Protocol - Transport Layer Security, and a version of Wi-Fi Protected Access.

8. The method of any proceeding claim, wherein determining the persistent identifier comprises inputting the random identifier into a hash function.

9. The method of any proceeding claim, wherein causing the user device to connect to the network comprises:
decrypting the encrypted information;
determining an association between the random identifier and the persistent identifier; and
granting, based on the association between the random identifier and the persistent identifier, network access to the user device.

10. The method of claim 1, further comprising sending, to a captive portal, at least one of the random identifier or the persistent identifier.

11. The method of any proceeding claim, further comprising:
determining an expiry associated with the random identifier; and
causing, based on the expiry of the random identifier, the user device to disconnect from the network.

12. The method of claim 11, wherein the expiry comprises a duration of time during which the random identifier is associated with the persistent identifier.

13. One or more non-transitory computer-readable media storing processor-executable instructions thereon that, when executed by a processor, cause the processor to perform the methods of any of claims 1-12.

14. An apparatus, comprising:
one or more processors; and
memory storing processor-executable instructions that, when executed by the one or more processors, cause the apparatus to perform the methods of any of claims 1-12.

15. A system comprising:
the apparatus of claim 14; and
a database configured to store the random identifier and the persistent identifier.

## Patentansprüche

1. Verfahren, umfassend:
Senden (710) einer Netzwerkadresse an eine Benutzereinrichtung auf Grundlage einer Anfrage von der Benutzereinrichtung, um mithilfe einer Zufallskennung eine Verbindung zu einem Netzwerk aufzubauen;
Empfangen (720), auf Grundlage der Netzwerkadresse, verschlüsselter Informationen, wobei die verschlüsselten Informationen eine dauerhafte Kennung umfassen, die der Benutzereinrichtung zugeordnet ist;
Bestimmen (730), auf Grundlage der verschlüsselten Informationen, der dauerhaften Kennung, die der Benutzereinrichtung zugeordnet ist; und
Veranlassen (740), auf Grundlage der Zufallskennung und der dauerhaften Kennung, des Verbindens der Benutzereinrichtung mit dem Netzwerk.

2. Verfahren nach Anspruch 1, ferner umfassend, auf Grundlage des Sendens der dauerhaften Kennung an einen mit der Benutzereinrichtung verbundenen Dienst, das Veranlassen der Benutzereinrichtung, auf den Dienst zuzugreifen.

3. Verfahren nach einem der vorhergehenden Ansprüche, wobei der Dienst mindestens einen von den folgenden umfasst: einen Abonnementdienst, einen Dienst für elterliche Aufsicht, einen Informationsverfolgungsdienst, einen privaten Netzwerkdienst und einen automatischen Anmeldedienst.

4. Verfahren nach einem der vorhergehenden Ansprüche, wobei die Benutzereinrichtung mindestens eine/s der folgenden umfasst: eine mobile Einrichtung, eine intelligente Einrichtung oder ein Wiedergabegerät für Inhalte.

5. Verfahren nach einem der vorhergehenden Ansprüche, wobei die Zufallskennung mindestens eine von den folgenden umfasst: eine zufällige Medienzugriffssteuerungsadresse, eine zufällige internationale Mobilfunkteilnehmeridentität und eine zufällige internationale Mobilfunkstationsausrüstungsidentität.

6. Verfahren nach einem der vorhergehenden Ansprüche, wobei die dauerhafte Kennung mindestens eine von den folgenden umfasst: eine Medienzugriffssteuerungsadresse, eine internationale Mobilfunkteilnehmeridentität und eine internationale Mobilfunkstationsausrüstungsidentität.

7. Verfahren nach einem der vorhergehenden Ansprüche, wobei das Empfangen der verschlüsselten Informationen das Empfangen der verschlüsselten Informationen über mindestens eines der folgenden Verfahren umfasst: Hypertext Transfer Protocol Secure, Extensible Authentication Protocol - Transport Layer Security und eine Version von Wi-Fi Protected Access.

8. Verfahren nach einem der vorhergehenden Ansprüche, wobei das Bestimmen der dauerhaften Kennung das Eingeben der Zufallskennung in eine Hash-Funktion umfasst.

9. Verfahren nach einem der vorhergehenden Ansprüche, wobei das Veranlassen der Benutzereinrichtung, sich mit dem Netzwerk zu verbinden, umfasst:
Entschlüsseln der verschlüsselten Informationen;
Feststellen einer Zuordnung zwischen der Zufallskennung und der dauerhaften Kennung; und
Gewähren, auf der Grundlage der Zuordnung zwischen der Zufallskennung und der dauerhaften Kennung, eines Netzwerkzugriffs auf die Benutzereinrichtung.

10. Verfahren nach Anspruch 1, ferner umfassend das Senden mindestens einer der Zufallskennung oder der dauerhaften Kennung an ein Captive-Portal.

11. Verfahren nach einem der vorhergehenden Ansprüche, ferner umfassend:
Bestimmen eines mit der Zufallskennung verbundenen Ablaufens; und
Veranlassen, aufgrund des Ablaufens der Zufallskennung, der Benutzereinrichtung, sich vom Netzwerk zu trennen.

12. Verfahren nach Anspruch 11, wobei das Ablaufen eine Zeitdauer umfasst, während der die Zufallskennung der dauerhaften Kennung zugeordnet ist.

13. Ein oder mehrere nicht-flüchtige computerlesbare Medien, auf denen prozessorausführbare Anweisungen gespeichert sind, die, wenn sie von einem Prozessor ausgeführt werden, den Prozessor veranlassen, das Verfahren nach einem der Ansprüche 1 bis 12 durchzuführen.

14. Vorrichtung, umfassend:
einen oder mehrere Prozessoren; und
Speicher, der prozessorausführbare Anweisungen speichert, die, wenn sie von dem einen oder mehreren Prozessoren ausgeführt werden, die Vorrichtung veranlassen, die Verfahren nach einem der Ansprüche 1 bis 12 auszuführen.

15. System, umfassend:
die Vorrichtung nach Anspruch 14; und eine Datenbank, dazu konfiguriert, die Zufallskennung und die dauerhafte Kennung zu speichern.

## Revendications

1. Procédé comprenant :
l'envoi (710), à un dispositif utilisateur, sur la base d'une requête depuis le dispositif utilisateur pour une connexion à un réseau à l'aide d'un identifiant aléatoire, d'une adresse de réseau ;
la réception (720), sur la base de l'adresse de réseau, d'une information chiffrée, dans lequel l'information chiffrée comprend un identifiant pérenne associé au dispositif utilisateur ;
la détermination (730), sur la base de l'information chiffrée, de l'identifiant pérenne associé au dispositif utilisateur ; et
le fait d'amener (740), sur la base de l'identifiant aléatoire et de l'identifiant pérenne, le dispositif utilisateur à se connecter au réseau.

2. Procédé selon la revendication 1, comprenant en outre le fait d'amener, sur la base de l'envoi de l'identifiant pérenne à un service associé au dispositif utilisateur, le dispositif utilisateur à accéder au service.

3. Procédé selon l'une quelconque des revendications précédentes, dans lequel le service comprend au moins l'un parmi : un service d'abonnement, un service de contrôle parental, un service de suivi d'information, un service de réseau privé et un service d'ouverture de session automatique.

4. Procédé selon l'une quelconque des revendications précédentes, dans lequel le dispositif utilisateur comprend au moins l'un parmi : un dispositif mobile, un dispositif intelligent ou un lecteur de contenu.

5. Procédé selon l'une quelconque des revendications précédentes, dans lequel l'identifiant aléatoire comprend au moins l'une parmi : une adresse MAC aléatoire, une Identité Internationale d'Abonné Mobile aléatoire et une Identité Internationale d'Équipement de Station Mobile aléatoire.

6. Procédé selon l'une quelconque des revendications précédentes, dans lequel l'identifiant pérenne comprend au moins l'une parmi : une adresse MAC, une Identité Internationale d'Abonné Mobile et une Identité Internationale d'Équipement de Station Mobile.

7. Procédé selon l'une quelconque des revendications précédentes, dans lequel la réception de l'information chiffrée comprend la réception de l'information chiffrée via au moins l'un parmi : un Protocole de Transfert Hypertexte Sécurisé, un Protocole d'Authentification Extensible - Sécurité de la Couche Transport, et une version de WPA.

8. Procédé selon l'une quelconque des revendications précédentes, dans lequel la détermination de l'identifiant pérenne comprend la saisie de l'identifiant aléatoire dans une fonction de hachage.

9. Procédé selon l'une quelconque des revendications précédentes, dans lequel le fait d'amener le dispositif utilisateur à se connecter au réseau comprend :
le déchiffrement de l'information chiffrée ;
la détermination d'une association entre l'identifiant aléatoire et l'identifiant pérenne ; et
le fait d'accorder, sur la base de l'association entre l'identifiant aléatoire et l'identifiant pérenne, un accès réseau au dispositif utilisateur.

10. Procédé selon la revendication 1, comprenant en outre l'envoi, à un portail captif, d'au moins l'un parmi l'identifiant aléatoire ou l'identifiant pérenne.

11. Procédé selon l'une quelconque des revendications précédentes, comprenant en outre :
la détermination d'une expiration associée à l'identifiant aléatoire ; et
le fait d'amener, sur la base de l'expiration de l'identifiant aléatoire, le dispositif utilisateur à se déconnecter du réseau.

12. Procédé selon la revendication 11, dans lequel l'expiration comprend une durée de temps pendant laquelle l'identifiant aléatoire est associé à l'identifiant pérenne.

13. Un ou plusieurs supports lisibles par ordinateur non transitoires stockant des instructions exécutables par processeur sur celui-ci qui, lorsqu'elles sont exécutées par un processeur, amènent le processeur à réaliser les procédés selon l'une quelconque des revendications 1-12.

14. Appareil, comprenant :
un ou plusieurs processeurs ; et
une mémoire stockant des instructions exécutables par processeur qui, lorsqu'elles sont exécutées par les un ou plusieurs processeurs, amènent l'appareil à réaliser les procédés selon l'une quelconque des revendications 1-12.

15. Système comprenant :
l'appareil selon la revendication 14 ; et
une base de données configurée pour stocker l'identifiant aléatoire et l'identifiant pérenne.
